# EUROPEAN PATENT APPLICATION

(11) **EP 4 742 020 A1**
(43) Date of publication of application: **13.05.2026**
(21) Application number: 24858574.7
(22) Date of filing: 27.08.2024
(51) Int. Cl.: G06F 3/04842

(54) **DISPLAY METHOD AND ELECTRONIC DEVICE**

(30) Priority: 29.08.2023 CN 202311103287
(71) Applicant: Huawei Technologies Co., Ltd., Shenzhen, Guangdong 518129 (CN)
(72) Inventor: TANG, Yingzhi, Shenzhen, Guangdong 518129 (CN)
(74) Representative: Thun, Clemens
(86) International application number: PCT/CN2024/114875
(87) International publication number: WO 2025/045038

(57) **Abstract**

This application provides a display method and an electronic device. The method is applied to the electronic device. The method includes: determining a plurality of pieces of media content in response to a received first operation; and displaying a first interface in response to a received second operation, where the first interface includes a first area and a second area, the first area includes a plurality of pieces of first media content, the second area includes the plurality of pieces of media content, and the plurality of pieces of first media content are included in the plurality of pieces of media content. The first operation is used to select the plurality of pieces of media content, and the second operation indicates to compare the plurality of pieces of media content; or the first operation is used to select at least two pieces of media content, the plurality of pieces of media content include the at least two pieces of media content, media content other than the at least two pieces of media content in the plurality of pieces of media content is determined based on the at least two pieces of media content, and the second operation indicates to compare the at least two pieces of media content. The method can enhance a display effect and comparison efficiency of media content.

## Description

### CROSS-REFERENCE TO RELATED APPLICATIONS

This application claims priority to Chinese Patent Application No. 202311103287.6, filed with the China National Intellectual Property Administration on August 29, 2023 and entitled "DISPLAY METHOD AND ELECTRONIC DEVICE", which is incorporated herein by reference in its entirety.

### TECHNICAL FIELD

This application relates to the field of electronic device technologies, and in particular, to a display method and an electronic device.

### BACKGROUND

Currently, users can compare a plurality of pictures by displaying the plurality of pictures simultaneously on a personal computer (personal computer, PC). However, this method has a poor display effect, and the users can only simultaneously view and compare the plurality of pictures displayed on the PC, resulting in low efficiency of viewing and comparing the pictures. In addition, some electronic devices such as mobile phones cannot provide the users with a function of displaying a plurality of pictures for comparison, and the users can only view and compare the pictures one by one. Currently, most electronic devices cannot display media content (for example, a video) of another type for comparison. Therefore, the electronic devices currently have a poor effect in displaying the media content.

### SUMMARY

This application provides a display method and an electronic device, to display media content for comparison, thereby enhancing a display effect and comparison efficiency of the media content.

According to a first aspect, this application provides a display method, applied to an electronic device, where the method includes: determining a plurality of pieces of media content in response to a received first operation; and displaying a first interface in response to a received second operation, where the first interface includes a first area and a second area, the first area includes a plurality of pieces of first media content, the second area includes the plurality of pieces of media content, and the plurality of pieces of first media content are included in the plurality of pieces of media content, where the first operation is used to select the plurality of pieces of media content, and the second operation indicates to compare the plurality of pieces of media content; or the first operation is used to select at least two pieces of media content, the plurality of pieces of media content include the at least two pieces of media content, media content other than the at least two pieces of media content in the plurality of pieces of media content is determined based on the at least two pieces of media content, and the second operation indicates to compare the at least two pieces of media content.

In the method, the electronic device can display the plurality of pieces of media content for comparison in the first area of the first interface, so that the media content can be displayed for comparison. This further enhances a display effect and comparison efficiency of the media content. In addition, when displaying the plurality of pieces of media content for comparison in the first area of the first interface, the electronic device may further display, in the second area of the first interface, the plurality of pieces of media content that are being compared and at least one other piece of media content. Therefore, more media content can be displayed on a media content comparison interface, and the display effect of the media content can be further enhanced. The at least one other piece of media content may be used as a candidate media content participating in comparison, namely, media content to participate in comparison, which can provide convenience for a user to adjust media content participating in comparison, thereby enhancing the comparison efficiency. In the method, media content in the first area may be media content that is participating in comparison. When the first operation is used to select the plurality of pieces of media content, media content in the second area other than the plurality of pieces of media content that are participating in comparison may be media content selected by the user. When the first operation is used to select the at least two pieces of media content, media content in the second area other than media content that is participating in comparison may be media content selected by the user or media content automatically determined by the electronic device. The media content is displayed in the second area, so that more to-be-selected media content can be provided for the user in addition to the media content that participates in comparison, to compare and display the media content more conveniently and efficiently, thereby further enhancing the display effect and the comparison efficiency of the media content.

In a possible design, the media content is at least one of the following types of content: a picture, an animated image, a video, and an audio.

In the method, the media content may be a plurality of different types of media content. This provides high flexibility and practicability.

In a possible design, a size of a display area occupied by each of the plurality of pieces of first media content in the first area is greater than a size of a display area occupied in the second area.

In the method, the size of the display area occupied by the media content in the first area is greater than the size of the display area occupied by the media content in the second area, which can ensure that the media content that is participating in comparison is displayed in a large size, and the media content that is participating in comparison is intuitively and prominently displayed, thereby enhancing the display effect of the media content and the user' viewing experience.

In a possible design, a similarity between any media content other than the at least two pieces of media content in the plurality of pieces of media content and any media content in the at least two pieces of media content is greater than or equal to a specified similarity threshold. The media content other than the at least two pieces of media content in the plurality of pieces of media content may be media content automatically selected by the electronic device, and the at least two pieces of media content may be content selected by the user. The similarity between the any media content other than the at least two pieces of media content in the plurality of pieces of media content and the any media content in the at least two pieces of media content is greater than or equal to the specified similarity threshold, so that media content similar to the media content selected by the user may be displayed in the second area, which is more convenient for comparison processing of the similar media content.

In a possible design, the plurality of pieces of first media content in the second area have a first mark, and the first mark indicates that the plurality of pieces of first media content are simultaneously displayed in the first area and the second area.

In the method, the media content that is participating in comparison may be intuitively marked with the first mark, which is convenient for the user to view. This provides high practicability.

In a possible design, the media content other than the at least two pieces of media content in the second area has a second mark, and the second mark is used to mark media content automatically selected by the electronic device.

In the method, the media content selected by the user and the media content automatically selected by the electronic device can be intuitively distinguished based on the second mark, so that the user can view and distinguish between different types of media content. This provides high practicability.

In a possible design, after displaying the first interface in response to the received second operation, the method further includes: updating second media content in the first area to third media content in response to a received third operation, where the second media content is one of the plurality of pieces of first media content, and the third media content is one of the plurality of pieces of media content except the plurality of pieces of first media content. Optionally, the third operation indicates to replace the second media content with the third media content.

In the method, the electronic device may replace the media content in the first area with media content in the second area. Based on the method, the electronic device can provide more abundant and practical media content comparison functions.

In a possible design, after displaying the first interface in response to the received second operation, the method further includes: additionally displaying fourth media content in the first area in response to a received fourth operation, where the fourth media content is one of the plurality of pieces of media content except the plurality of pieces of first media content. The fourth operation indicates to add the fourth media content to the first area.

In the method, after displaying the media content that participates in comparison, namely, the media content in the first area, the electronic device may further additionally display the media content that is participating in comparison. Therefore, more abundant and practical media content comparison functions can be provided.

In a possible design, after displaying the first interface in response to the received second operation, the method further includes: in response to a received fifth operation, zooming in fifth media content for display; or in response to a received sixth operation, zooming out fifth media content for display, where the fifth media content is any one of the plurality of pieces of first media content. Optionally, the fifth operation indicates to zoom in the fifth media content for display, and the sixth operation indicates to zoom out the sixth media content for display.

In the method, after displaying the media content that participates in comparison, namely, the media content in the first area, the electronic device may further separately zoom in or out, for display, the media content that is participating in comparison. This provides high flexibility and practicability.

In a possible design, after displaying the first interface in response to the received second operation, the method further includes: in response to a received seventh operation, zooming in the plurality of pieces of first media content for display, where zoom-in ratios of the plurality of pieces of first media content are the same; or in response to a received eighth operation, zooming out the plurality of pieces of first media content for display, where zoom-out ratios of the plurality of pieces of first media content are the same.

In the method, after displaying the media content that participates in comparison, namely, the media content in the first area, the electronic device may further zoom in or out, in a linked manner for display, the media content that is participating in comparison. This provides high flexibility and practicability.

In a possible design, after displaying the first interface in response to the received second operation, the method further includes: adjusting a display location of sixth media content in response to a received ninth operation; or changing display locations of sixth media content and seventh media content in response to a received tenth operation, where the sixth media content is one of the plurality of pieces of first media content, and the seventh media content is another one of the plurality of pieces of first media content.

In the method, after displaying the media content that participates in comparison, namely, the media content in the first area, the electronic device may flexibly adjust a display location of the media content that is participating in comparison. This provides high practicability.

In a possible design, after displaying the first interface in response to the received second operation, the method further includes: deleting eighth media content in the first area in response to a received eleventh operation, where the eighth media content is one of the plurality of pieces of first media content.

In the method, after displaying the media content that participates in comparison, namely, the media content in the first area, the electronic device may delete the media content that is participating in comparison. This provides high practicability.

In a possible design, before determining the plurality of pieces of media content in response to the received first operation, the method further includes: displaying a second interface, where the second interface includes the plurality of pieces of media content; and after deleting the eighth media content in the first area in response to the received eleventh operation, the method further includes: displaying a third interface in response to a received twelfth operation, where the third interface includes media content other than the eighth media content in the plurality of pieces of media content. Optionally, the twelfth operation indicates to stop displaying the media content for comparison.

In the method, after the electronic device performs a deletion operation on the media content that is participating in comparison and exits the comparison, the deletion operation performed by the electronic device on the media content remains effective. The foregoing method allows the user to perform an effective deletion operation on the media content in the process of comparing the media content. This provides high practicability.

In a possible design, after displaying the first interface in response to the received second operation, the method further includes: adding a third mark to ninth media content in the first area in response to a received thirteenth operation, where the ninth media content is one of the plurality of pieces of first media content.

In the method, after displaying the media content that participates in comparison, namely, the media content in the first area, the electronic device may mark the media content that is participating in comparison. This provides high practicability.

In a possible design, before determining the plurality of pieces of media content in response to the received first operation, the method further includes: displaying a second interface, where the second interface includes the plurality of pieces of media content; and after adding the third mark to the ninth media content in the first area in response to the received thirteenth operation, the method further includes: displaying a fourth interface in response to a received fourteenth operation, where the fourth interface includes the plurality of pieces of media content, and the ninth media content in the plurality of pieces of media content has the third mark.

In the method, after the electronic device performs a marking operation on the media content that is participating in comparison and exits the comparison, the marking operation performed by the electronic device on the media content remains effective. The foregoing method allows the user to perform an effective marking operation on the media content in the process of comparing the media content. This provides high practicability.

In a possible design, after displaying the first interface in response to the received second operation, the method further includes: updating tenth media content in the first area in response to a received fifteenth operation, where the tenth media content is one of the plurality of pieces of first media content.

In the method, after displaying the media content that participates in comparison, namely, the media content in the first area, the electronic device may perform processing such as editing and updating on the media content that is participating in comparison. This provides high practicability.

In a possible design, before determining the plurality of pieces of media content in response to the received first operation, the method further includes: displaying a second interface, where the second interface includes the plurality of pieces of media content; and after updating the tenth media content in the first area in response to the received fifteenth operation, the method further includes: displaying a fifth interface in response to a received sixteenth operation, where the fifth interface includes: media content other than the tenth media content in the plurality of pieces of media content, and updated tenth media content.

In the method, after the electronic device performs update processing on the media content that is participating in comparison and exits the comparison, the update processing performed by the electronic device on the media content remains effective. The foregoing method allows the user to perform an effective update operation on the media content in the process of comparing the media content. This provides high practicability.

In a possible design, the media content is a video or an audio; and after displaying the first interface in response to the received second operation, the method further includes: starting to play eleventh media content from a first location of the eleventh media content, and starting to play twelfth media content from a second location of the twelfth media content, where the eleventh media content is one of the plurality of pieces of first media content, the twelfth media content is another one of the plurality of pieces of first media content, and a similarity between media content at the first location of the eleventh media content and media content at the second location of the twelfth media content is greater than or equal to a specified threshold.

In the method, when displaying a video or an audio for comparison, the electronic device may start playing from similar locations of a plurality of videos or audios that participate in comparison, so that the user can conveniently view and compare the video or the audio. This provides high practicability.

According to a second aspect, an embodiment of this application provides an electronic device. The electronic device includes a display, a memory, and one or more processors. The memory is configured to store computer program code. The computer program code includes computer instructions. When the computer instructions are executed by the one or more processors, the electronic device is caused to perform the method according to the first aspect or any one of the possible designs of the first aspect.

According to a third aspect, this application provides a computer-readable storage medium. The computer-readable storage medium stores a computer program. When the computer program is run on an electronic device, the electronic device is caused to perform the method according to the first aspect or any one of the possible designs of the first aspect.

According to a fourth aspect, this application provides a computer program product. The computer program product includes a computer program or instructions. When the computer program or the instructions are run on an electronic device, the electronic device is caused to perform the method according to the first aspect or any one of the possible designs of the first aspect.

According to a fifth aspect, this application provides a chip system. The chip system includes a processor and a memory. The memory stores instructions. When the instructions are executed by the processor, the method according to the first aspect or any one of the possible designs of the first aspect is implemented. The chip system may include a chip, or may include a chip and another discrete component.

For beneficial effects of the second aspect to the fifth aspect, refer to the descriptions of the beneficial effects of the related content in the first aspect. Details are not described herein again.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3 is a diagram of a display method according to an embodiment of this application;
FIG. 4 is a diagram of a gallery interface according to an embodiment of this application;
FIG. 5 is a diagram of a picture selection interface according to an embodiment of this application;
FIG. 6 is a diagram of a picture comparison interface according to an embodiment of this application;
FIG. 7 is a diagram of a picture selection interface according to an embodiment of this application;
FIG. 8 is a diagram of a picture comparison interface according to an embodiment of this application;
FIG. 9 is a diagram of a picture comparison interface according to an embodiment of this application;
FIG. 10 is a diagram of a picture comparison interface according to an embodiment of this application;
FIG. 11 is a diagram of a picture comparison interface according to an embodiment of this application;
FIG. 12 is a diagram of a picture comparison interface according to an embodiment of this application;
FIG. 13 is a diagram of a picture comparison interface according to an embodiment of this application;
FIG. 14 is a diagram of a picture comparison interface according to an embodiment of this application;
FIG. 15a is a diagram of a picture comparison interface according to an embodiment of this application;
FIG. 15b is a diagram of a picture comparison interface according to an embodiment of this application;
FIG. 16 is a diagram of a picture comparison interface according to an embodiment of this application;
FIG. 17 is a diagram of a picture comparison interface according to an embodiment of this application;
FIG. 18 is a diagram of a picture comparison interface according to an embodiment of this application;
FIG. 19 is a diagram of a picture selection interface according to an embodiment of this application;
FIG. 20 is a diagram of a gallery interface according to an embodiment of this application;
FIG. 21a is a diagram of a video comparison interface according to an embodiment of this application;
FIG. 21b is a diagram of a video comparison interface according to an embodiment of this application;
FIG. 22 is a diagram of a display method according to an embodiment of this application; and
FIG. 23 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions about concepts related to this application are provided as examples for reference.

An electronic device may be a device having a display function. In some embodiments of this application, the electronic device may be a portable device, for example, a mobile phone, a tablet computer, a wearable device with a display function, a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, an uncrewed aerial vehicle, or an aircraft).

In some embodiments of this application, the electronic device may alternatively be a portable terminal device that further includes another function such as an audio and video playing function. An example embodiment of the portable terminal device includes but is not limited to a portable terminal device using Android^{®} or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

It should be understood that in embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

To enhance a display effect and comparison efficiency of media content, embodiments of this application provide a display method and an electronic device. In this solution, media content can be displayed for comparison, so that a user can conveniently and quickly view and compare different media content, and a display effect and comparison efficiency of the media content can be enhanced.

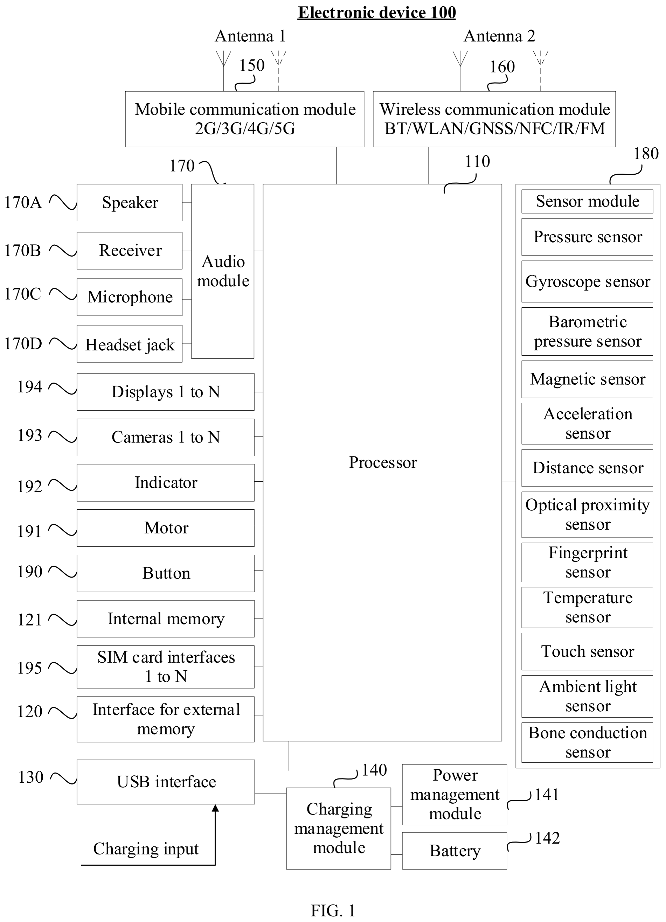

The following describes, with reference to FIG. 1, a structure of an electronic device to which a method according to an embodiment of this application is applicable.

As shown in FIG. 1, the electronic device 100 may include a processor 110, an interface 120 for external memory, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or a combination of two or more components, or a different component layout. The various components shown in FIG. 1 may be implemented in hardware including one or more signal processing circuits and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and enhances system efficiency.

The display method provided in embodiments of this application may be executed by the processor 110 by controlling or invoking another component. For example, a processing program in embodiments of this application stored in the internal memory 121 is invoked, or a processing program in embodiments of this application stored in a third-party device is invoked by using the interface 120 for external memory, to control the wireless communication module 160 to perform data communication with another device, so as to improve intelligence and convenience of the electronic device 100 and improve user experience. The processor 110 may include different components. For example, when a CPU and a GPU are integrated, the CPU and the GPU may cooperate to perform the display method provided in embodiments of this application. For example, in the display method, some algorithms are executed by the CPU, and some other algorithms are executed by the GPU, to achieve high processing efficiency.

The display 194 may be configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information input by a user or information provided for the user and various graphical user interfaces (graphical user interface, GUI). For example, the display 194 may display media content such as a photo or a video.

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as both a front-facing camera and a rear-facing camera) is configured to capture a static image or a video. Usually, the camera 193 may include a photosensitive element such as a lens group and an image sensor. The lens group includes a plurality of lenses (convex lens or concave lens), and is configured to: capture an optical signal reflected by a to-be-photographed object, and transfer the captured optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, code of an application (for example, a function corresponding to the solution of this application), and the like. The data storage area may store data and the like that are created during use of the electronic device 100.

The internal memory 121 may further store one or more computer programs corresponding to the algorithms in the solutions of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, or may include a non-volatile memory, for example, at least one magnetic disk storage device, a flash storage device, or a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application stored in the external memory.

The sensor module 180 may include a gyroscope sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 constitute a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor may alternatively be disposed on a surface of the electronic device 100 at a location different from that of the display 194.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low-noise amplifier (low-noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110. In embodiments of this application, the mobile communication module 150 may be further configured to exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio apparatus (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 is configured to: establish a connection to another electronic device, and exchange data. Alternatively, the wireless communication module 160 may be configured to access an access point device, send a control instruction to another electronic device, or receive data sent by another electronic device.

In addition, the electronic device 100 may implement an audio function, such as music playing and recording, by using the audio module 170, the speaker 170A, the receiver 170B, the microphone 170C, the headset jack 170D, the application processor, and the like. The electronic device 100 may receive an input from the button 190, and generate a button signal input related to user settings and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, during actual application, the electronic device 100 may include more or fewer components than those shown in FIG. 1. This is not limited in embodiments of this application. The electronic device 100 shown in the figure is merely an example, and the electronic device 100 may have more or fewer components than those shown in the figure, or a combination of two or more components, or a different component layout. The various components shown in the figure may be implemented in hardware including one or more signal processing circuits and/or application-specific integrated circuits, software, or a combination of hardware and software.

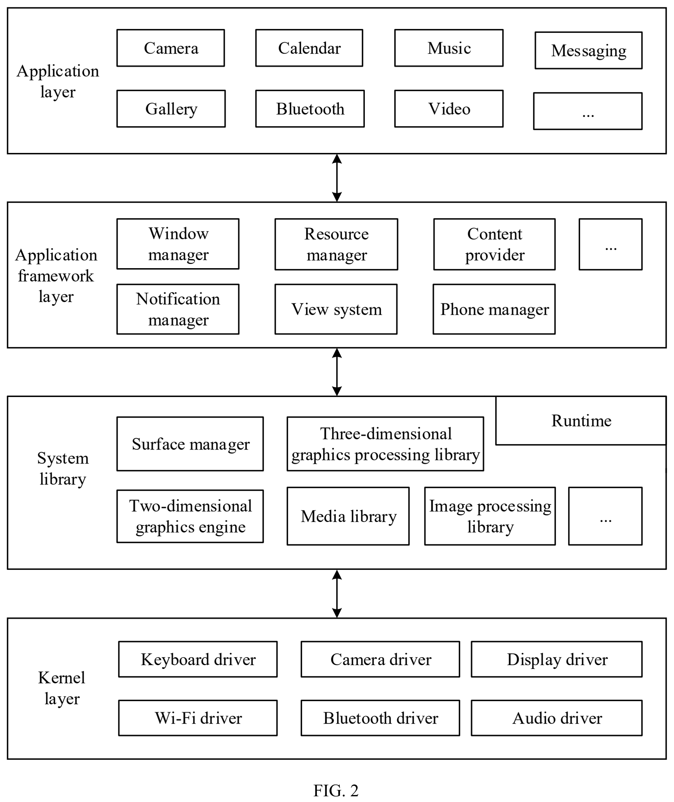

A software system of the electronic device 100 may use a layered architecture, an event-driven architecture, a microkernel architecture, a micro service architecture, or a cloud architecture. In a layered architecture, software is divided into several layers, and each layer has a clear role and task. The layers communicate with each other through a software interface. For example, as shown in FIG. 2, the software architecture may be divided into four layers: an application layer, an application framework (framework, FWK) layer, a runtime and system library, and a (Linux) kernel (kernel) layer from top to bottom.

The application layer is an uppermost layer of the operating system, includes a native application of the operating system, such as Camera, Gallery, Calendar, Bluetooth, Music, Video, and Messaging, and may further include a third-party application. An application program in embodiments of this application is briefly referred to as an application (application, APP), and is a software program that can implement one or more specific functions. Generally, a plurality of applications may be installed in the electronic device, for example, a camera application and an email application. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (application programming interface, API) provided by the application framework layer. The developer may interact with a bottom layer (for example, the kernel layer) of the operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of a display, determine whether there is a status bar, perform display (screen) locking, take a screenshot, and the like.

The content provider is configured to: store and obtain data, and enable the data to be accessed by an application. The data may include information such as a file (for example, a document, a video, an image, or audio) and a text.

The view system includes visual controls, for example, controls that display content such as a text, a picture, and a document. The view system may be used to construct an application. An interface in a display window may include one or more views. For example, a display interface including an SMS message notification icon may include a text display view and an image display view.

The phone manager is configured to provide a communication function of the electronic device. The notification manager enables an application to display notification information in a status bar, and may be configured to convey a notification message. The notification manager may automatically disappear after a short pause without requiring a user interaction.

A runtime includes a core library and a virtual machine. The runtime is responsible for scheduling and management of the system.

The core library of the system may include two parts: a functional function that needs to be invoked by using the Java language, and a core library of the system. The application layer and the application framework layer run on the virtual machine. Java is used as an example. The virtual machine executes a binary file of a Java file at the application layer and the application framework layer. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to: manage a display subsystem and provide fusion of two-dimensional and three-dimensional layers for a plurality of applications. The media library supports playing and recording in a plurality of commonly used audio and video formats, and static image files. The media library may support a plurality of audio and video encoding formats such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and software stacks. The layer has a plurality of drivers related to the electronic device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. During actual application, the electronic device may be divided into more or fewer function services based on another factor, or may be divided into functions of each service in another manner, or may not be divided into function services, but work as a whole.

The following describes in detail the solutions provided in this application with reference to the accompanying drawings.

In the solutions provided in embodiments of this application, the electronic device may display a plurality of pieces of media content for comparison, and may conveniently and quickly perform an operation (for example, add, delete, modify, zoom, mark, and edit) on the compared media content. The media content may be content of a plurality of types such as a picture, a video, and an audio. In the following embodiments, the solutions provided in embodiments of this application are described in detail by using an example in which the media content is a picture in a gallery. For a corresponding method in which the media content is content of another type, refer to the following method. Details are not described in this embodiment of this application.

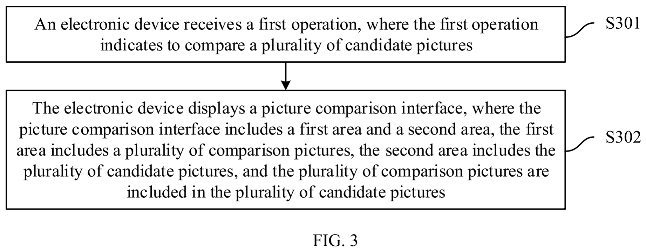

With reference to FIG. 3, a display method provided in an embodiment of this application may include the following steps.

S301: An electronic device receives a first operation, where the first operation indicates to compare a plurality of candidate pictures.

In some embodiments of this application, the plurality of candidate pictures may be a plurality of pictures selected by a user from pictures included in a gallery (or an album).

Optionally, before step S301, the electronic device may further perform the following step: The electronic device determines the plurality of candidate pictures in response to a received second operation. The second operation is used to select the plurality of candidate pictures.

In some embodiments of this application, the first operation may be an operation of tapping, by the user, a compare control displayed by the electronic device, and the compare control may be configured to control execution of a picture comparison function or trigger display of a picture comparison interface.

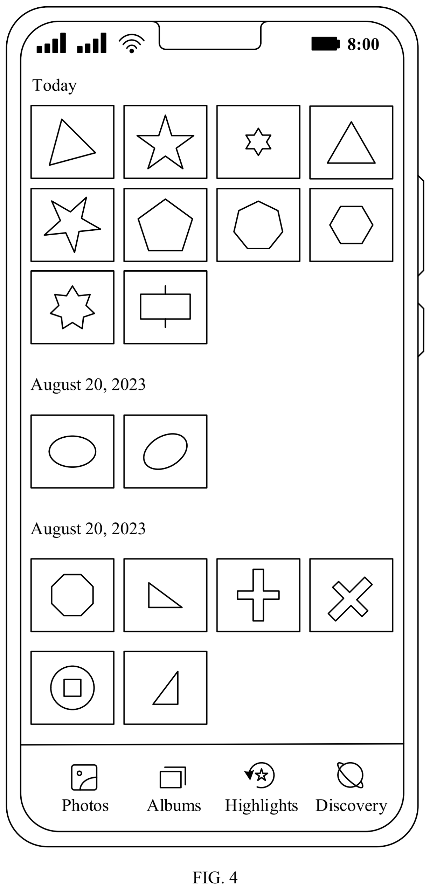

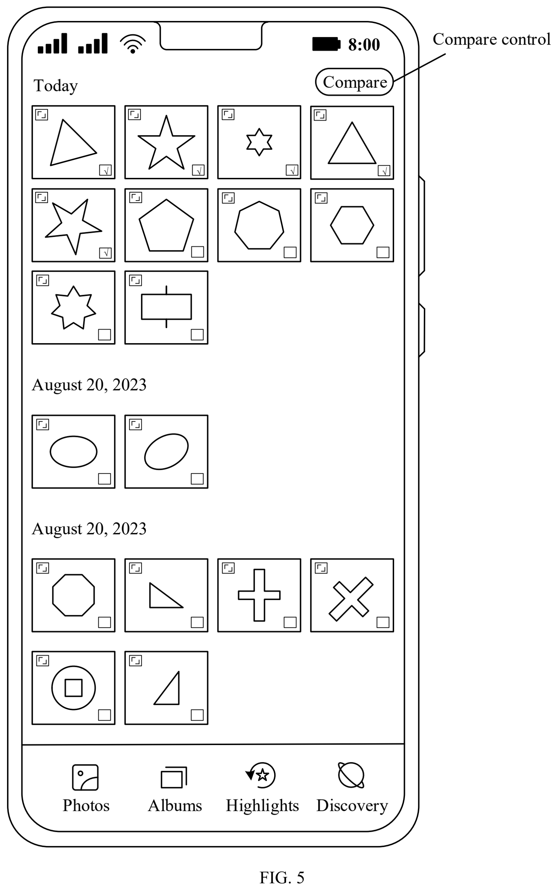

For example, FIG. 4 shows a gallery interface, and the interface includes a plurality of pictures. After the user selects the plurality of candidate pictures from the pictures included in the gallery shown in FIG. 4, the electronic device may display an interface shown in FIG. 5. The interface includes the plurality of pictures selected by the user, another picture that is not selected by the user and that is included in the gallery, and the compare control. Marks of the plurality of selected pictures are different from those of unselected pictures. The plurality of selected pictures are the plurality of candidate pictures. When the user taps the compare control shown in FIG. 5, the electronic device receives the first operation.

S302: The electronic device displays the picture comparison interface, where the picture comparison interface includes a first area and a second area, the first area includes a plurality of comparison pictures, the second area includes the plurality of candidate pictures, and the plurality of comparison pictures are included in the plurality of candidate pictures.

A size of a same picture in the first area is greater than a size of the picture in the second area.

In some embodiments of this application, a quantity of the plurality of comparison pictures may be a specified value, for example, may be an integer value like 2 or 4. The plurality of comparison pictures may be some or all of the plurality of candidate pictures. In a possible solution, when a quantity of the plurality of candidate pictures is greater than the specified value, the plurality of comparison pictures include some of the plurality of candidate pictures (that is, a specified quantity of pictures in the plurality of candidate pictures); or when a quantity of the plurality of candidate pictures is less than the specified value, the plurality of comparison pictures include all of the plurality of candidate pictures.

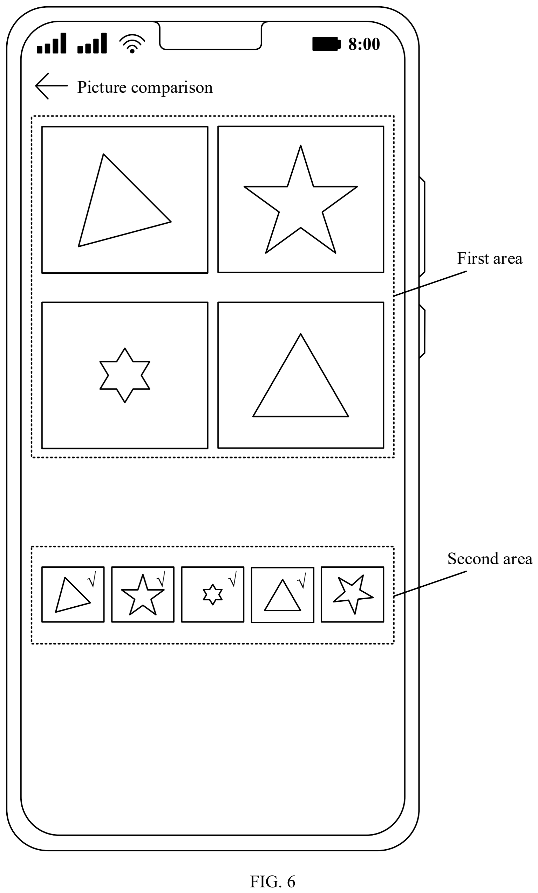

Embodiment 1: In an example, it is assumed that the specified value is 4. When the plurality of candidate pictures selected by the user include five selected pictures shown in FIG. 5, the picture comparison interface displayed by the electronic device may be an interface shown in FIG. 6. The first area of the interface may include four of the five candidate pictures, and the second area of the interface may include all of the five candidate pictures.

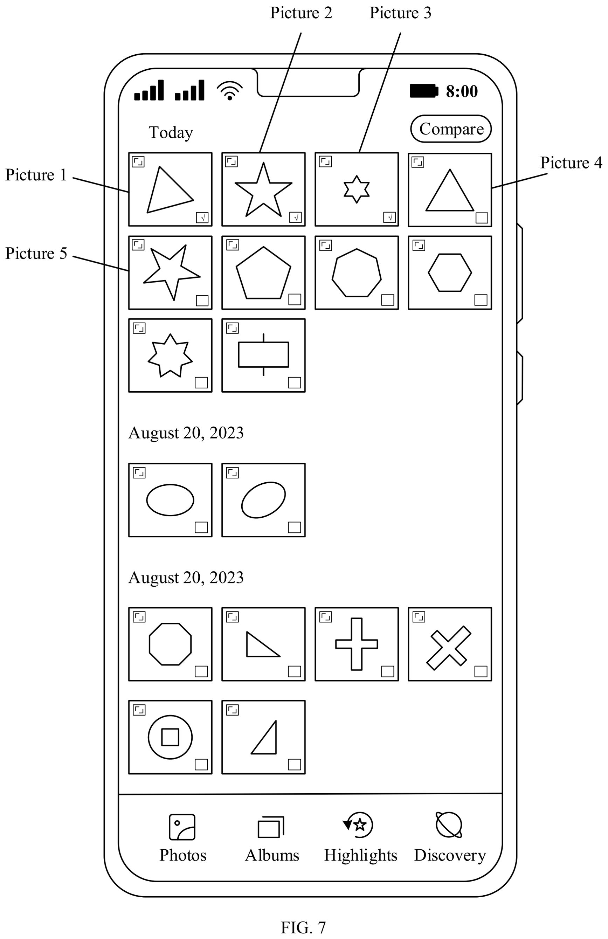

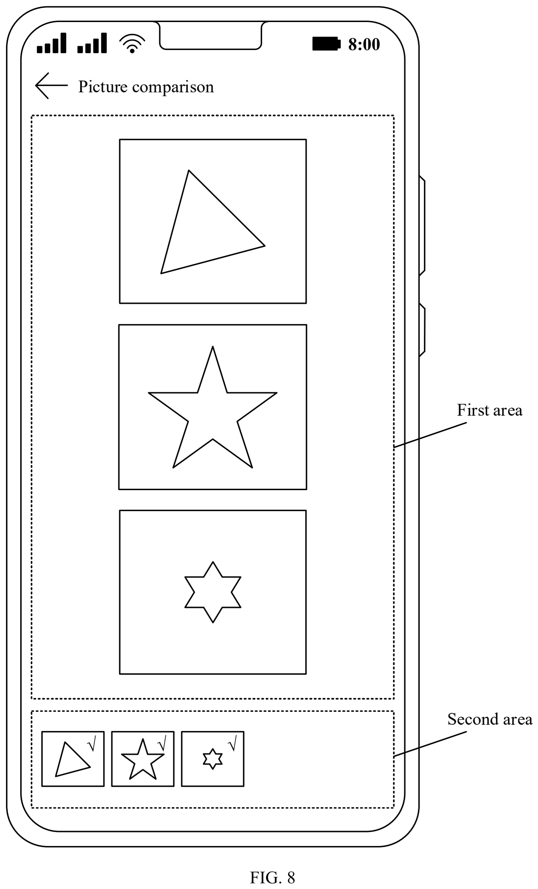

Embodiment 2: In an example, it is assumed that the specified value is 4. When the plurality of candidate pictures selected by the user include three selected pictures (namely, pictures 1 to 3) shown in FIG. 7, the picture comparison interface displayed by the electronic device may be an interface shown in FIG. 8. The first area of the interface may include all of the three candidate pictures, and the second area of the interface may include all of the three candidate pictures.

In some embodiments of this application, an arrangement sequence of the plurality of comparison pictures in the first area and an arrangement sequence of the plurality of candidate pictures in the second area may be determined according to the following sequence: a random sequence, a selection sequence of the user, or an arrangement sequence in the gallery. Optionally, the plurality of comparison pictures may be evenly distributed in the first area, and sizes of display areas occupied by different comparison pictures may be the same.

In some embodiments of this application, the plurality of comparison pictures may be selected from the plurality of candidate pictures according to a specified rule, and the specified rule may be any one of the following:
(1) Random selection
(2) A specified quantity of pictures are selected, as the plurality of comparison pictures, from the plurality of candidate pictures according to a sequence in which the plurality of candidate pictures are selected by the user.
(3) A specified quantity of pictures are selected, as the plurality of comparison pictures, from the plurality of candidate pictures according to a sequence in which the plurality of candidate pictures are arranged in the gallery.

In some embodiments of this application, the electronic device may add comparison marks to comparison pictures included in the second area, so that the user can distinguish between pictures displayed in the first area and pictures not displayed in the first area in the plurality of candidate pictures. For example, as shown in FIG. 6, the electronic device may add a comparison mark, for example, a "√" mark, to a candidate picture that corresponds to a comparison picture and that is in the second area. The comparison mark may indicate that the corresponding picture is being displayed for comparison (that is, displayed in the first area).

In some embodiments of this application, when the quantity of the plurality of candidate pictures displayed in the second area is large, for example, when the quantity of the plurality of candidate pictures is greater than or equal to the specified quantity, the electronic device may display some of the plurality of candidate pictures in the second area, and switch, based on a user operation, candidate pictures displayed in the second area. In an optional implementation, the second area may include at least one of the plurality of candidate pictures and an expansion control. When receiving an operation of tapping the expansion control, the electronic device may further display an interface including a plurality of candidate pictures, so that the user can clearly view the plurality of candidate pictures. In another optional implementation, the second area may include at least one of the plurality of candidate pictures, and the user may control, by performing a sliding operation in the second area, the electronic device to switch to display another candidate picture in the second area. In still another optional implementation, the plurality of candidate pictures may be displayed in batches in the second area. The second area may include at least one of the plurality of candidate pictures and a switching control. When receiving an operation of tapping the switching control, the electronic device may switch the at least one candidate picture currently in the second area to at least one candidate picture other than the at least one candidate picture.

In some embodiments of this application, after the user selects the plurality of candidate pictures, the electronic device may create a temporary folder, and cache the plurality of copied candidate pictures in the temporary folder. Pictures (including a comparison picture and a candidate picture) displayed on the picture comparison interface may be pictures obtained by the electronic device from the temporary folder. When the user performs an operation on a picture on the picture comparison interface, the electronic device may perform the operation on a corresponding picture stored in the temporary folder. Subsequently, when the electronic device stops displaying the picture comparison interface, the electronic device may perform a same operation on a corresponding picture in the gallery based on an operation performed on the picture in the temporary folder. For example, when the user deletes a picture on the picture comparison interface, the electronic device may delete the picture in the temporary folder. Subsequently, when the electronic device stops displaying the picture comparison interface, because the picture is deleted from the temporary folder, the electronic device may also delete the picture from the gallery.

In some embodiments of this application, in addition to the plurality of candidate pictures, the second area may include at least one reference picture automatically selected by the electronic device from the gallery. Each of the at least one reference picture may be a picture that is selected by the electronic device from the gallery and whose similarity to any one of the plurality of candidate pictures is greater than a specified threshold.

Specifically, after the user selects the plurality of candidate pictures, for each candidate picture, the electronic device may search the gallery for a picture whose similarity to the candidate picture is greater than the specified threshold, and if the picture exists, the found picture may be used as a reference picture. Optionally, the electronic device may determine a similarity between different pictures by using a specified artificial intelligence (artificial intelligence, AI) model used for picture similarity analysis.

Based on the foregoing method, the plurality of comparison pictures in the first area may be the plurality of candidate pictures and some or all of the at least one reference picture. Optionally, the electronic device may preferentially select the plurality of comparison pictures from the plurality of candidate pictures. When the quantity of the plurality of candidate pictures is less than the specified threshold, the electronic device may use all the plurality of candidate pictures as comparison pictures, and continue to select, from the at least one reference picture, a picture as a comparison picture until a quantity of selected comparison pictures reaches the specified threshold, or until it is determined that all reference pictures are used as comparison pictures. For example, it is assumed that the specified threshold is 6, the quantity of the plurality of candidate pictures is 4, and a quantity of the at least one reference picture is 4. In this case, the electronic device may use all the four candidate pictures as comparison pictures, and select, as comparison pictures, two pictures from the four reference pictures. For another example, it is assumed that the specified threshold is 6, the quantity of the plurality of candidate pictures is 4, and a quantity of the at least one reference picture is 1. In this case, the electronic device may use the four candidate pictures and the one reference picture as comparison pictures.

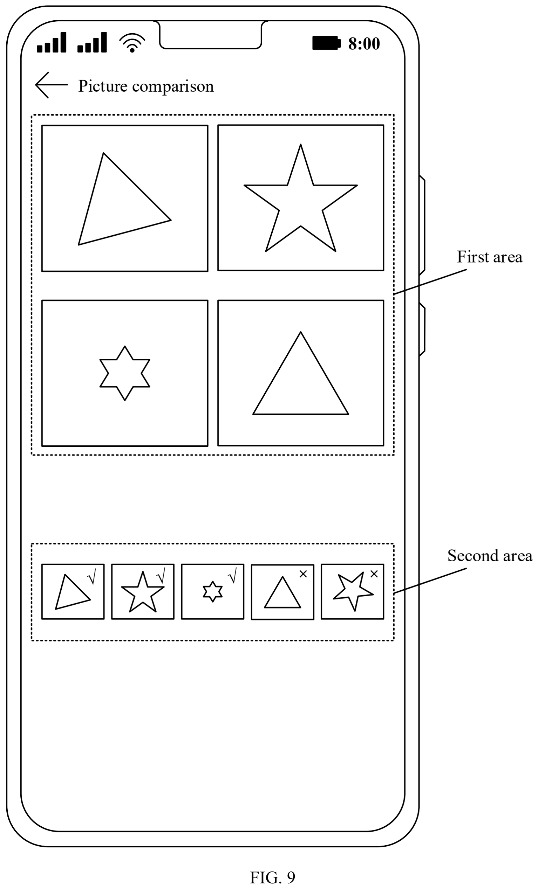

Embodiment 3: In an example, it is assumed that the specified threshold is 4. When the plurality of candidate pictures selected by the user include pictures 1 to 3 shown in FIG. 7, if assuming that it is electronically determined that a similarity between a picture 4 and the picture 1 shown in FIG. 7 is greater than the specified threshold, and a similarity between a picture 5 and the picture 2 shown in FIG. 7 is greater than the specified threshold, the electronic device may determine the picture 4 and the picture 5 as reference pictures. When receiving that the user taps the compare control shown in FIG. 7, the electronic device may display an interface shown in FIG. 9 in response to the operation. On the interface, the second area includes the pictures 1 to 5, and the first area includes four pictures in total, namely, the pictures 1 to 4 in the pictures 1 to 5.

In some embodiments of this application, when displaying at least one reference picture in the second area, the electronic device may mark the at least one reference picture, so that the user distinguishes between a candidate picture selected by the user and a reference picture automatically selected by the electronic device. For example, as shown in FIG. 9, the electronic device may add "×" marks to the picture 4 and the picture 5, to indicate that the picture 4 and the picture 5 are pictures automatically selected by the electronic device.

In addition to the special processing method for the at least one reference picture, for a processing method for a picture in the second area, refer to the processing method for the plurality of candidate pictures in the second area in the foregoing embodiment. Details are not described herein again.

It should be understood that, in the foregoing embodiment, an example in which pictures in the first area and pictures in the second area are from the gallery is used for description. However, a picture source of the first area and a picture source of the second area are not limited to the gallery, and may further include other picture sources, such as a cloud and a web page. In other words, the pictures in the first area may come from different locations, and the pictures in the second area may come from different locations. For example, the pictures in the second area may include at least one of the following: a picture selected from the gallery, a picture downloaded from a cloud, and a picture copied from a web page.

In some embodiments of this application, in response to a received operation, the electronic device may add a comparison picture to the first area, or perform operations such as replacement, deletion, zooming (that is, zooming in or out), marking, and editing on a comparison picture in the first area. Details are separately described below.

### (1). Add

In some embodiments of this application, the electronic device may add a picture to the first area for display in response to a received operation. The operation may be an operation of selecting and dragging a picture by the user, another setting operation, or the like. This is not specifically limited in embodiments of this application. For example, when the user selects any picture from the second area, drags the picture to the first area, and releases the picture, the electronic device may additionally display the picture in the first area in response to the operation. Optionally, the electronic device may further add a comparison mark to the picture in the second area. The picture is different from the comparison picture displayed in the first area.

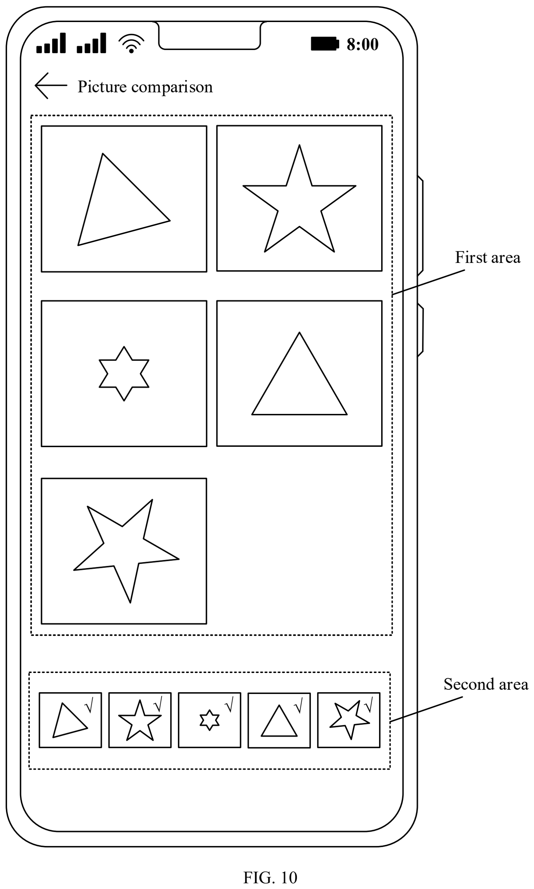

Embodiment 4: In an example, based on the scenario described in Embodiment 1, as shown in FIG. 6, the first area includes four pictures, and the second area includes five pictures. When the user selects a 5^{th} picture in the second area, drags the picture to a range of the first area, and then releases the picture, in response to the operation, the electronic device may switch to display an interface shown in FIG. 10. The interface is different from the interface shown in FIG. 6 as follows: The 5^{th} picture in the second area is added to the first area, and a comparison mark, for example, "√", used to mark the picture is added to the 5^{th} picture in the second area. Optionally, the operation performed by the user in the foregoing example may alternatively be another selection operation.

### (2) Replace

In some embodiments of this application, the electronic device may change, in response to a received operation, a picture displayed in the first area. The operation may be an operation of selecting and dragging a picture by the user, another setting operation, or the like. This is not specifically limited in embodiments of this application. For example, when the user drags any candidate picture (or a reference picture) in the second area to an area in which any comparison picture in the first area is located and releases the candidate picture, the electronic device may replace the comparison picture with the candidate picture in response to the operation. Optionally, the electronic device may further delete a comparison mark of the comparison picture in the second area, and add a comparison mark to the candidate picture in the second area. The candidate picture is different from the comparison picture.

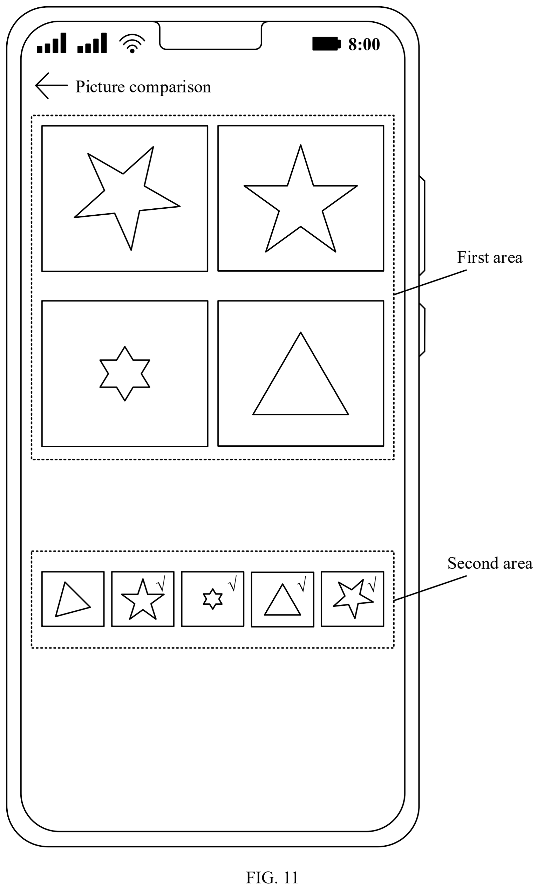

Embodiment 5: In an example, based on the scenario described in Embodiment 1, as shown in FIG. 6, the first area includes four pictures, and the second area includes five pictures. When the user selects a 5^{th} picture in the second area, drags the picture to a range of a 1^{st} picture in the first area, and then releases the picture, in response to the operation, the electronic device may switch to display an interface shown in FIG. 11. The interface is different from the interface shown in FIG. 6 as follows: The 1^{st} picture in the first area is replaced with the 5^{th} picture in the second area, a comparison mark "√" of the 1^{st} picture in the second area is no longer displayed, and a comparison mark "√" is added to the 5^{th} picture in the second area. Optionally, the operation performed by the user in the foregoing example may alternatively be another selection operation.

### (3). Delete

In some embodiments of this application, when the user performs a deletion operation on any comparison picture in the first area (for example, after touching and holding to select the comparison picture, the user taps, on a pop-up operation selection interface, a control configured to control picture deletion), the electronic device may delete, in response to the operation, the comparison picture displayed in the first area. Optionally, the electronic device may delete the comparison picture displayed in the second area, or may delete a comparison mark of the comparison picture displayed in the second area. Optionally, when there is only one picture in the first area and the picture is deleted, the electronic device may exit the picture comparison interface, and may switch to display the gallery interface.

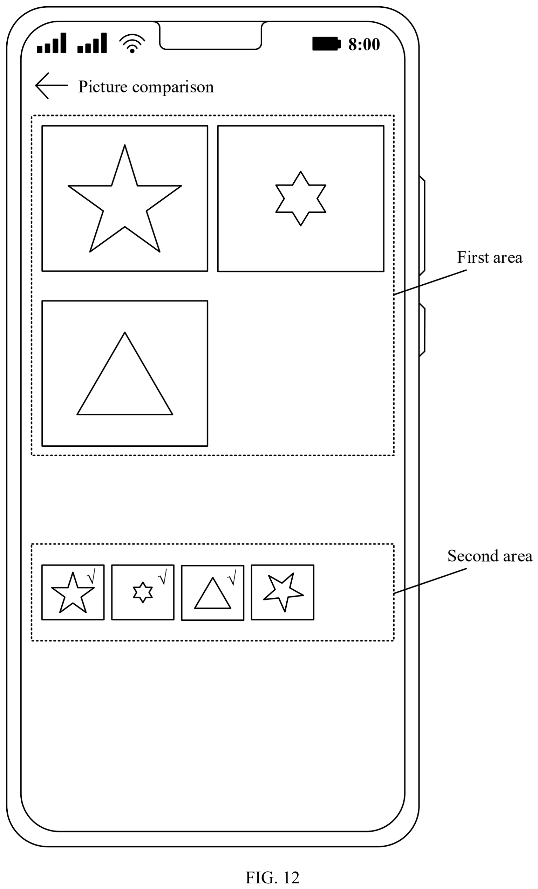

Embodiment 6: In an example, based on the scenario described in Embodiment 1, as shown in FIG. 6, the first area includes four pictures, and the second area includes five pictures. When the user taps to delete a 1^{st} picture in the first area, in response to the operation, the electronic device may switch to display an interface shown in FIG. 12. The interface is different from the interface shown in FIG. 6 as follows: The original 1^{st} pictures are deleted from both the first area and the second area. Optionally, the operation performed by the user in the foregoing example may alternatively be another operation used to control picture deletion.

### (4) Zoom

In a first possible solution, the electronic device may zoom in or out a single picture in the first area in response to a received operation. For example, the user may perform an operation of zooming in or out a picture in a range of an area in which any comparison picture is located in the first area, to control the electronic device to zoom in or out the comparison picture. In response to the operation of zooming in or out the comparison picture performed by the user, the electronic device may zoom in or out, for display, the comparison picture in the range of the area in which the comparison picture is located. The operation that is performed by the user and that is used to zoom in or out the picture may be another operation. This is not specifically limited in embodiments of this application. Further, after zooming in/out the picture for display, the electronic device may further perform, in response to an operation of selecting and dragging the picture by the user, panning, for display, in a display area in which the picture is located. The operation that is performed by the user and that is used to pan the picture may be another operation. This is not specifically limited in embodiments of this application. Based on the foregoing method, the electronic device may perform operations such as zooming in or out and panning on a single picture in the first area, so that the user can conveniently view picture details.

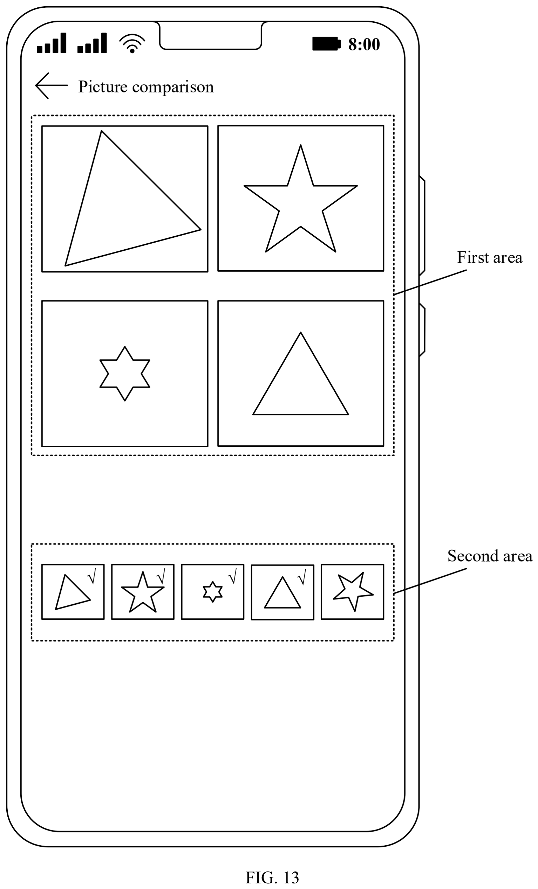

Embodiment 7: In an example, based on the scenario described in Embodiment 1, as shown in FIG. 6, the first area includes four pictures, and the second area includes five pictures. When the user performs an operation of zooming in a picture on a 1^{st} picture in the first area, in response to the operation, the electronic device may switch to display an interface shown in FIG. 13. The interface is different from the interface shown in FIG. 6 as follows: The 1^{st} picture in the first area is zoomed in for display.

In a second possible solution, the electronic device may zoom in or out all pictures in the first area in a linked manner in response to a received operation. For example, the user may perform an operation of zooming in or out a picture in the first area, to control the electronic device to synchronously zoom in or out all comparison pictures in the first area. In response to the operation of zooming in or out the picture performed by the user in the first area, the electronic device may zoom in or out, for display, the comparison picture in a range of an area in which each comparison picture is located. The operation that is performed by the user and that is used to zoom in or out the picture may be another operation. This is not specifically limited in embodiments of this application. Based on the foregoing method, the electronic device may perform a linked zoom-in or zoom-out operation on a picture in the first area, so that the user can conveniently view picture details and compare pictures. Further, after zooming in or out the comparison picture in the first area in a linked manner for display, the electronic device may further perform, in response to an operation of selecting and dragging any comparison picture by the user, linked panning on the comparison picture in the first area for display. The operation that is performed by the user and that is used to pan the picture may be another operation. This is not specifically limited in embodiments of this application.

In the foregoing method, when the electronic device zooms in or out a picture for display, a display area occupied by the picture may remain unchanged, or may be zoomed in or out as the picture is zoomed in or out.

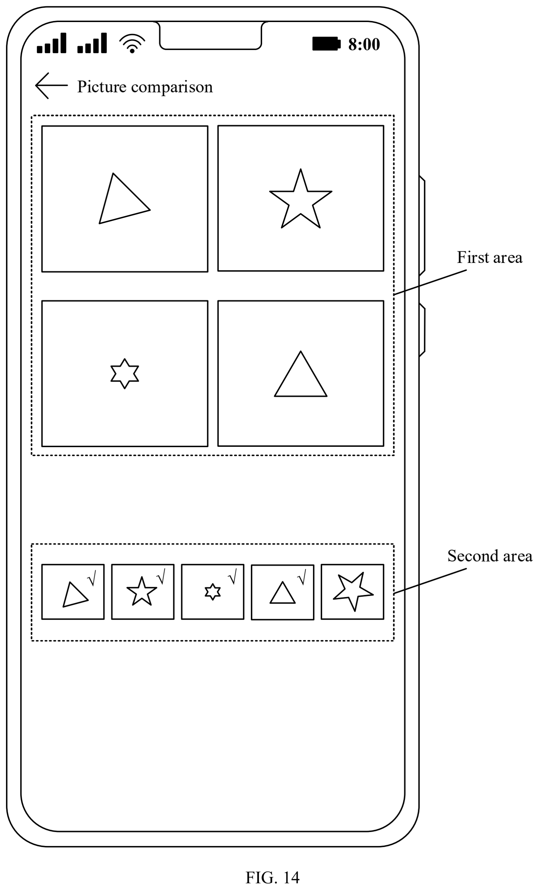

Embodiment 8: In an example, based on the scenario described in Embodiment 1, as shown in FIG. 6, the first area includes four pictures, and the second area includes five pictures. When the user performs an operation of zooming out a picture in the first area, in response to the operation, the electronic device may switch to display an interface shown in FIG. 14. The interface is different from the interface shown in FIG. 6 as follows: Each comparison picture in the first area is zoomed out for display.

In some embodiments of this application, in response to a received operation, the electronic device may switch between a mode of zooming a single picture and a mode of zooming a plurality of pictures in a linked manner. After switching to the mode of zooming a single picture in response to the received operation, the electronic device may perform processing according to the foregoing first possible solution. After switching to the mode of zooming a plurality of pictures in a linked manner in response to the received operation, the electronic device may perform processing according to the foregoing second possible solution. Based on the method, the electronic device may flexibly switch between different control modes, so that the user performs picture processing in different modes.

### (5) Panning

In a first possible solution, the electronic device may pan a single picture in the first area in response to a received operation.

In an optional implementation, the user may select any comparison picture in the first area, drag the comparison picture to an area in which another comparison picture is located, and release the comparison picture, to control the electronic device to pan the comparison picture to the area in which the another comparison picture is located. In response to the operation, the electronic device may pan the comparison picture to the area in which the another comparison picture is located. Optionally, the electronic device may simultaneously pan the another comparison picture to an area in which the comparison picture is located. Based on the method, the electronic device may exchange display areas of any two pictures in the first area. The operation that is performed by the user and that is used to pan the picture may be another operation. This is not specifically limited in embodiments of this application.

In another optional implementation, the user may select any comparison picture in the first area and drag the comparison picture to a location before or after another comparison picture, to control the electronic device to pan the picture to the location before or after the another comparison picture. In response to the operation, the electronic device may pan the comparison picture to the location before or after the another comparison picture for display, to implement panning of the comparison picture.

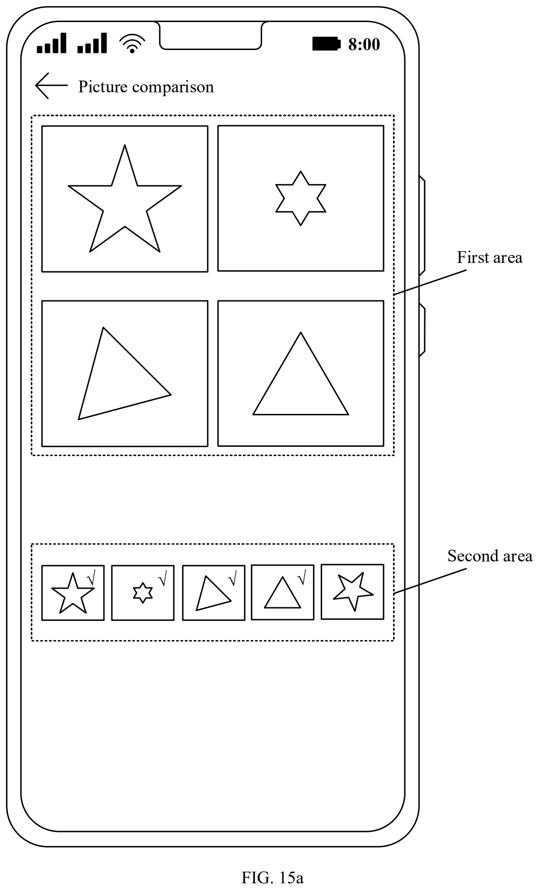

Embodiment 9: In a 1^{st} example, based on the scenario described in Embodiment 1, as shown in FIG. 6, the first area includes four pictures, and the second area includes five pictures. When the user selects a 1^{st} picture, drags the picture to a location before a 4^{th} picture, and releases from the drag, in response to the operation, the electronic device may switch from displaying the interface shown in FIG. 6 to displaying an interface shown in FIG. 15a. The interface is different from the interface shown in FIG. 6 as follows: An original 1^{st} picture in the first area is moved rightward to become a 3^{rd} picture, and original 2^{nd} and 3^{rd} pictures in the first area are moved leftward to become 1^{st} and 2^{nd} pictures respectively.

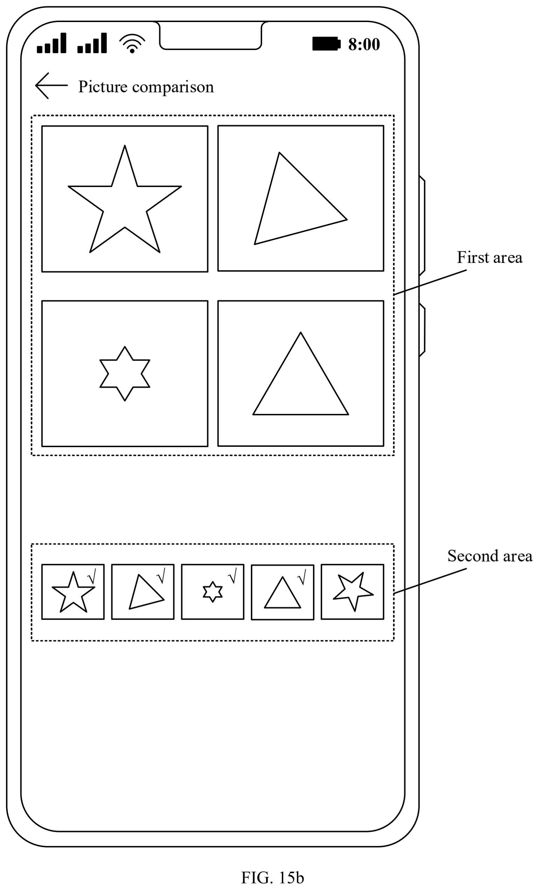

In a 2^{nd} example, based on the scenario described in Embodiment 1, as shown in FIG. 6, the first area includes four pictures, and the second area includes five pictures. When the user selects a 2^{nd} picture, drags the picture to a location before a 1^{st} picture, and releases from the drag, in response to the operation, the electronic device may switch from displaying the interface shown in FIG. 6 to displaying an interface shown in FIG. 15b. The interface is different from the interface shown in FIG. 6 as follows: An original 2^{nd} picture in the first area is moved leftward to become a 1^{st} picture, and the original 1^{st} picture in the first area is moved rightward to become a 2^{nd} picture.

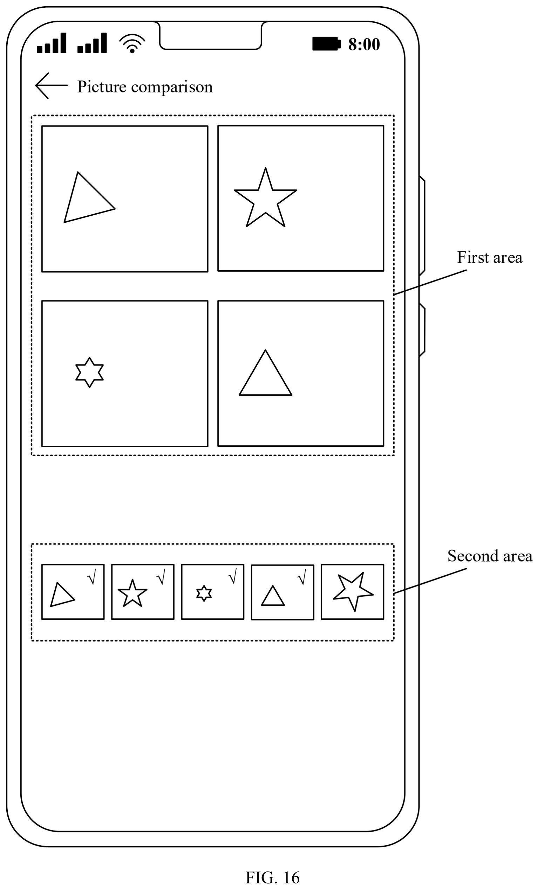

In some embodiments of this application, after performing zoom-in or zoom-out processing on a single picture, in response to a received operation, the electronic device may pan and display the picture in a display area in which the picture is located. The operation may be an operation of selecting and dragging a picture, or may be another operation. This is not specifically limited in embodiments of this application. Similarly, after performing linked zoom-in or zoom-out processing on a plurality of pictures, in response to a received operation, the electronic device may perform a linked panning operation (for example, moving leftward, moving rightward, moving upward, or moving downward) on the plurality of pictures, where a panning operation on each picture is performed in a display area in which each picture is located. For example, after the electronic device displays an interface shown in FIG. 14, in response to a received operation indicating to move a picture leftward in a linked manner, the electronic device may switch from displaying the interface shown in FIG. 14 to displaying an interface shown in FIG. 16. The interface is different from the interface shown in FIG. 14 as follows: Each comparison picture is panned leftward by a specific distance in a display area of the comparison picture.

Optionally, in the foregoing method, the arrangement sequence of the pictures in the second area may change with the arrangement sequence of the pictures in the first area. Optionally, the arrangement sequence of the pictures in the second area may be consistent with the arrangement sequence of the pictures in the first area.

### (6) Mark

In some embodiments of this application, a marking operation performed by the user on a comparison picture may be favorites or the like. When displaying comparison pictures, the electronic device may simultaneously display mark icons corresponding to the comparison pictures, and may switch a display format (for example, a color, a shape, or a size) of the mark icon in response to an operation performed by the user on the mark icon (for example, an operation of tapping the mark icon), so that a mark status (including marked or unmarked) of a corresponding comparison picture is represented by using different display formats of the mark icon.

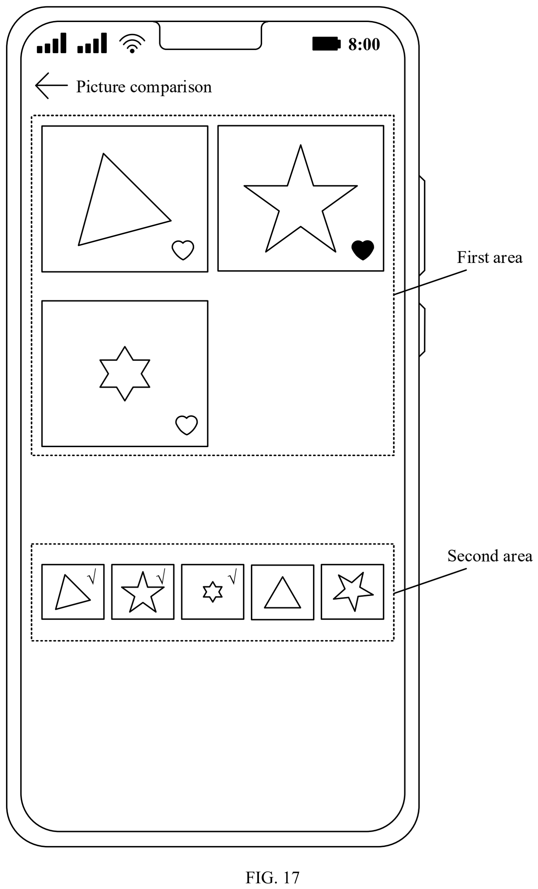

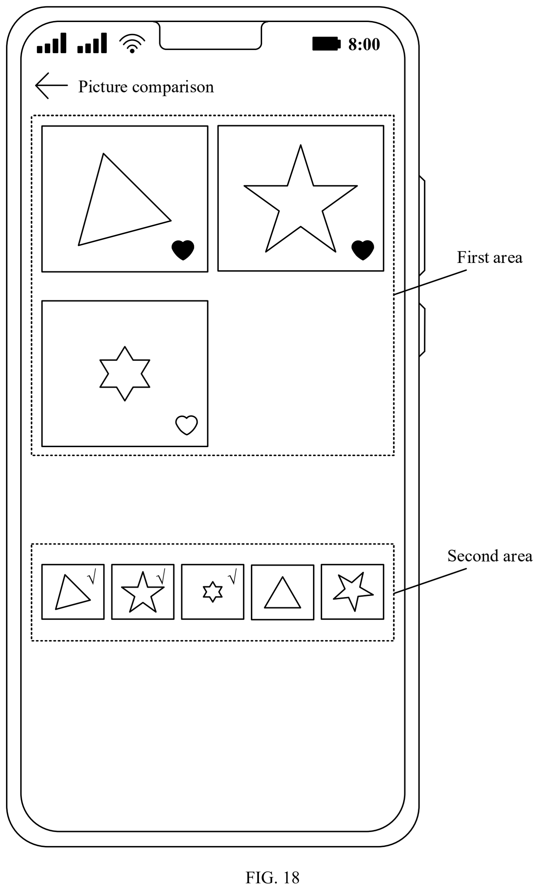

Embodiment 10: In an example, a marking operation is a Favorites operation. As shown in FIG. 17, the first area includes three pictures, and each picture has a corresponding Favorites icon. When the Favorites icon is white, it indicates that a corresponding comparison picture is not added to Favorites; or when the Favorites icon is black, it indicates that a corresponding comparison picture is added to Favorites. The second area includes five pictures. When the user taps the Favorites icon corresponding to a 1^{st} picture in the first area, in response to the operation, the electronic device may switch to display an interface shown in FIG. 18. The interface is different from the interface shown in FIG. 17 as follows: The Favorites icon corresponding to the 1^{st} picture in the first area changes from white to black. When the user taps the Favorites icon corresponding to the 1^{st} picture in the first area again, the electronic device may switch the Favorites icon from black to white in response to the operation. Optionally, the operation performed by the user in the foregoing example may alternatively be another marking operation.

It should be noted that, in the foregoing embodiment, a user operation manner used to add a comparison picture to the first area, or perform operations such as replacement, deletion, marking, or zooming on a comparison picture in the first area is merely an example. During actual application, another user operation manner may be used to control implementation of the foregoing picture operation effect. No specific limitation is posed on the user operation manner in embodiments of this application.

### (7) Edit

In some embodiments of this application, the user may perform an editing operation on the comparison picture in the first area. The electronic device may update, in response to the editing operation performed by the user on the comparison picture, pictures displayed in the first area and the second area. The editing operation may be a picture processing operation, for example, cropping a picture size, adding a filter, or modifying a picture name. This is not specifically limited in embodiments of this application.

In some embodiments of this application, after displaying the picture comparison interface, the electronic device may automatically select at least one comparison picture from the plurality of comparison pictures in the first area according to a specified policy, and switch to display the selected at least one comparison picture in the first area. Alternatively, after displaying the picture comparison interface, the electronic device may select, in response to a received automatic screening operation, at least one comparison picture from the plurality of comparison pictures in the first area according to a specified policy, and switch to display the selected at least one comparison picture in the first area. Optionally, the specified policy may be that a similarity between pictures is greater than or equal to a specified picture similarity threshold, a picture shooting time difference is less than or equal to a specified time threshold, or the like. This is not specifically limited in embodiments of this application. Optionally, the automatic screening operation may be an operation performed by the user on a control that is displayed by the electronic device and that is configured to control a function of automatic picture screening.

In some embodiments of this application, after the user performs one or more of the foregoing operations on a picture in the first area, the electronic device may exit display of the picture comparison interface in response to the user operation. The user operation may be an operation of tapping an exit control on the picture comparison interface. During display of the picture comparison interface, when the electronic device performs a deletion, marking, or editing operation on a comparison picture on the picture comparison interface in response to a user operation, the electronic device may perform a same deletion, marking, or editing operation on a comparison picture in the gallery after exiting display of the picture comparison interface. Optionally, the electronic device may switch to display an updated gallery interface after exiting display of the picture comparison interface. The updated gallery interface may include a picture obtained after the electronic device performs the same deletion, marking, or editing operation on the comparison picture in the gallery, and another picture in the gallery. Based on the method, when viewing the picture comparison interface, the user can conveniently update pictures in the gallery. This provides high picture comparison efficiency.

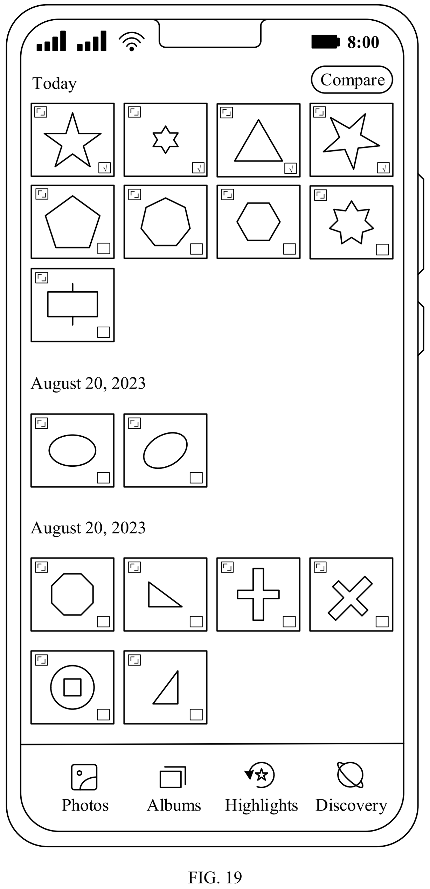

Embodiment 11: In an example, in the scenario described in Embodiment 6, after the electronic device displays the interface shown in FIG. 12, in response to an operation of tapping an exit control on the interface by the user, the electronic device may switch to display a gallery interface shown in FIG. 19. Because a 1^{st} comparison picture is deleted during display of the picture comparison interface, compared with a gallery interface before display of the picture comparison interface, namely, the gallery interface shown in FIG. 4, a 1^{st} picture is deleted from the gallery interface shown in FIG. 19, and in this case, four pictures are selected.

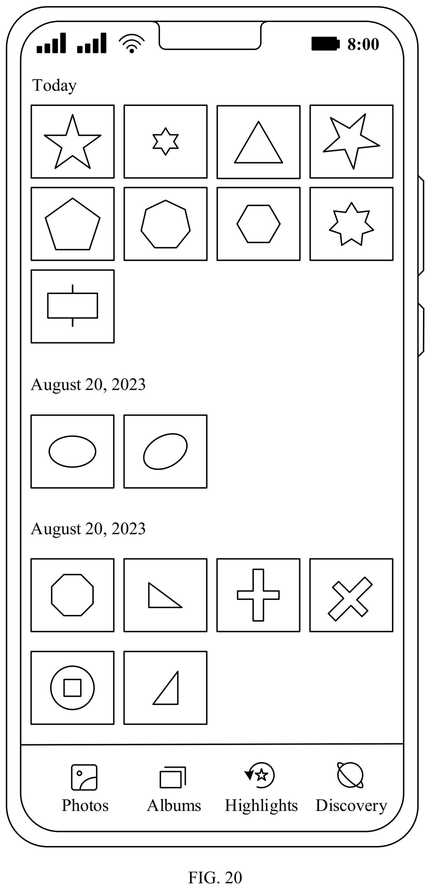

In the foregoing example, all pictures displayed on the gallery interface shown in FIG. 19 after the electronic device exits display of the picture comparison interface are in a selection state (that is, a state in which a picture can be selected or deselected, or may be understood as a state in which a picture and a control used to select/deselect the picture are simultaneously displayed), and correspond to a state before display of the picture comparison interface (that is, a state of a picture on the interface shown in FIG. 5). In some embodiments of this application, pictures displayed on the gallery interface after the electronic device exits display of the picture comparison interface may alternatively be in a display state (that is, a state in which only a picture is displayed). For example, the interface shown in FIG. 19 may be replaced with an interface shown in FIG. 20.

In some embodiments of this application, in response to a received operation, the electronic device may add a picture to the second area, or perform a deletion operation on a picture in the second area. Details are separately described below.

In some embodiments of this application, the electronic device may add a picture to the second area for display in response to a received operation. The operation may be a setting operation or the like. This is not specifically limited in embodiments of this application. For example, the second area may include a control configured to control addition of a picture. When the user taps the control, the electronic device may display a picture selection interface in response to the operation. The interface includes at least one picture that is not displayed in the second area. The user may select, on the picture selection interface, a picture that needs to be added to the second area. After the user selects the picture that needs to be added to the second area, the electronic device may add the picture to the second area. Optionally, the at least one picture may be marked as an unselected picture. Optionally, the picture selection interface may further include a candidate picture in the second area, and the candidate picture may be marked as a selected picture. The picture marked as a selected picture may also be understood as a picture that has been selected by the user and displayed in the second area. Alternatively, the picture selection interface may further include a candidate picture and a reference picture in the second area, and the candidate picture and the reference picture may be marked as selected pictures. The picture marked as a selected picture may also be understood as a picture displayed in the second area.

In some embodiments of this application, the electronic device may delete a picture in the second area in response to a received operation. The operation may be a setting operation or the like. This is not specifically limited in embodiments of this application. For example, when the user performs a deletion operation on any picture in the second area (for example, after touching and holding to select the picture, the user taps, on a pop-up operation selection interface, a control configured to control picture deletion), the electronic device may delete, in response to the operation, the picture displayed in the second area. Optionally, when deleting the picture displayed in the second area, the electronic device may also delete the picture displayed in the first area, or may not delete the picture displayed in the first area. Optionally, when there is only one picture in the second area and the picture is deleted, the electronic device may exit the picture comparison interface, and may switch to display the gallery interface.

In some embodiments of this application, for a solution in which the electronic device performs operation processing on the picture in the second area, refer to the foregoing method for performing operation processing on the picture in the first area by the electronic device. Details are not described herein again.

In some embodiments of this application, the picture in the foregoing embodiments may be replaced with a video. The electronic device may display the video by displaying a cover image of the video, displaying the video that is being played, or the like.

In some embodiments of this application, when the picture in the foregoing embodiments is replaced with the video, the electronic device may display a plurality of comparison videos in the first area. Optionally, the electronic device may select a plurality of similar videos from the plurality of comparison videos according to a specified policy, further determine a similar frame of each video from the plurality of similar videos, and start to play the video from a location of the similar frame of each video. The specified policy may be that a video similarity is greater than or equal to a specified video similarity threshold, or the like. This is not specifically limited in embodiments of this application. A manner in which the electronic device determines a similar frame of each device in the plurality of videos may be selecting a similar frame of each video based on a specified condition. This is not specifically limited in embodiments of this application. For example, the specified condition may be: A picture similarity between similar frames of different videos in the plurality of videos is greater than or equal to a specified picture similarity threshold; or similar frames of different videos in the plurality of videos all include a same target object. Optionally, the electronic device may implement, by using a specified AI model, the foregoing method for selecting a similar audio or determining a similar frame in the similar audio.

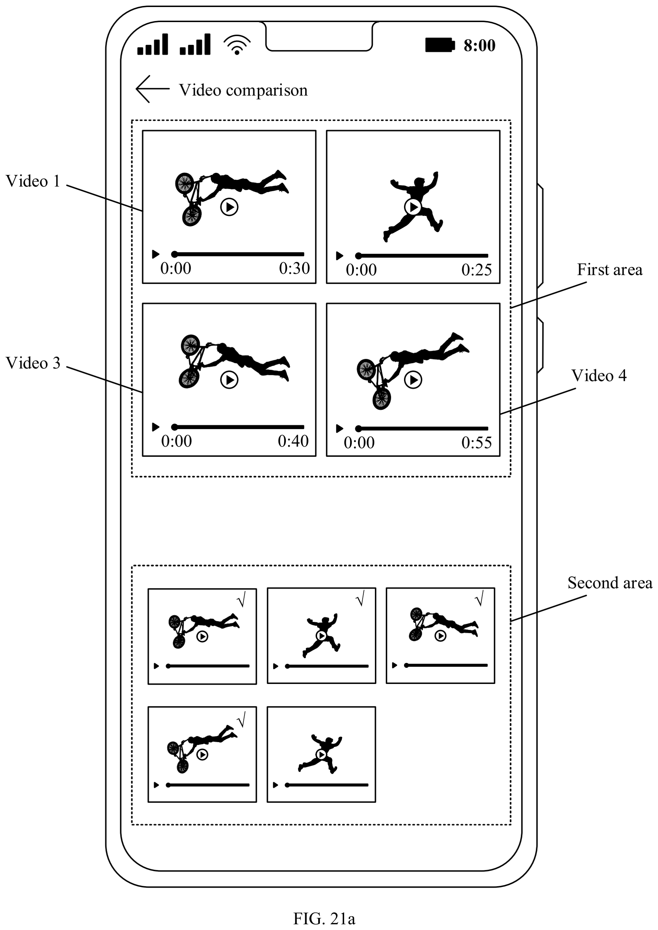

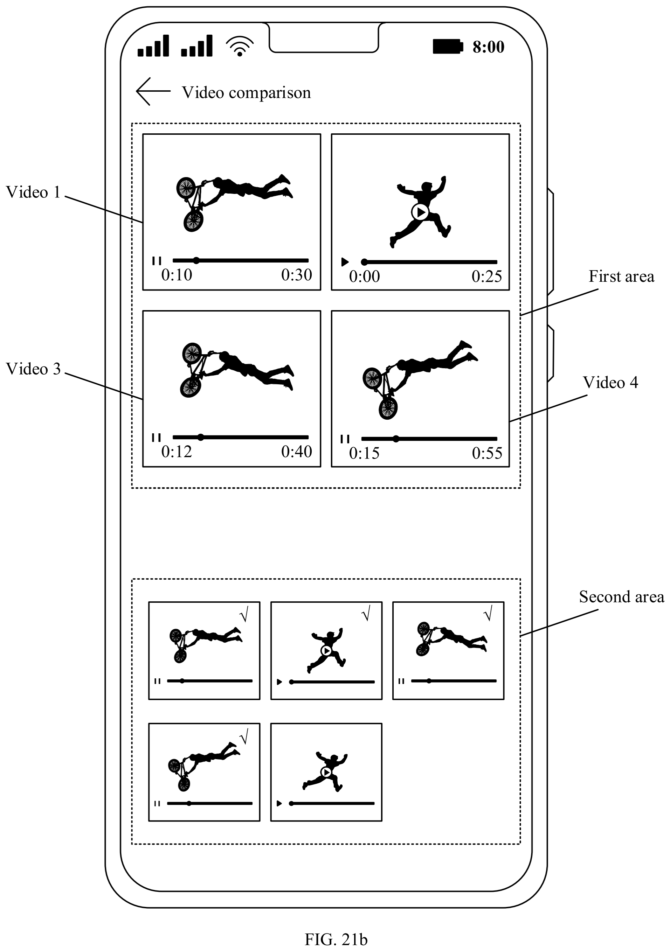

Embodiment 12: In an example, when the picture in the foregoing embodiment is replaced with the video, the picture comparison interface in the foregoing embodiment may be understood as a video comparison interface. The video comparison interface may include a first area and a second area. The first area may include a plurality of comparison videos, and the second area may include a plurality of candidate videos, or may include a plurality of candidate videos and at least one reference video. For the comparison video, refer to descriptions of the comparison picture in the foregoing embodiments. For the candidate video, refer to descriptions of the candidate picture in the foregoing embodiments. For the reference video, refer to descriptions of the reference picture in the foregoing embodiments. Details are not described herein again. For example, as shown in FIG. 21a, the first area of the video comparison interface may include four videos, the second area may include five videos, and the four videos in the first area are included in the five videos in the second area. In an optional implementation, when detecting that similar clips exist in a video 1, a video 3, and a video 4, the electronic device may consider that the video 1, the video 3, and the video 4 are similar videos, and may further determine similar frames from the video 1, the video 3, and the video 4. For example, when determining that the video frame at the 10^{th} second in the video 1, the video frame at the 12^{th} second in the video 3, and the video frame at the 15^{th} second in the video 4 all include a same target object, the electronic device may consider that the video frame at the 10^{th} second in the video 1, the video frame at the 12^{th} second in the video 3, and the video frame at the 15^{th} second in the video 4 are similar frames. As shown in FIG. 21b, the electronic device may separately start video playing from the video frame at the 10^{th} second in the video 1, the video frame at the 12^{th} second in the video 3, and the video frame at the 15^{th} second in the video 4, so that the user can conveniently view videos with similar content simultaneously.

Based on the method provided in the foregoing embodiment, the electronic device may select a plurality of pictures to form a temporary comparison library and display the temporary comparison library, so that the user can quickly and intuitively view and compare the plurality of pictures without viewing and comparing the pictures one by one. Therefore, the foregoing method has high efficiency of displaying the pictures for comparison. In addition, in a process in which the electronic device displays the plurality of compared pictures, the user may be supported in performing various operations such as replacing, deleting, zooming, marking, and editing on the compared picture on the picture comparison interface, so that practicability and convenience are high.

In some embodiments of this application, the picture in the foregoing embodiments may be replaced with an audio. The electronic device may display the audio by displaying an icon of an audio file or the like. This is not specifically limited in embodiments of this application.

In some embodiments of this application, when the picture in the foregoing embodiments is replaced with the audio, the electronic device may display, in the first area, icons corresponding to a plurality of comparison audios. Optionally, the electronic device may select a plurality of similar audios from the plurality of comparison audios, further determine a start location of a same voice in the plurality of similar audios, and start to play the plurality of similar audios from the start location of the same voice. For a manner in which the electronic device determines the plurality of similar audios and determines the start location of the same voice in the similar audio, refer to the foregoing manner in which the electronic device determines the plurality of similar videos and determines the similar frame in the similar video. Details are not described herein again.

Based on the method provided in the foregoing embodiments, the electronic device may display a plurality of pieces of media content with high display efficiency for comparison, so that the user can view and compare different media content, thereby improving user experience.

It should be noted that specific implementation procedures provided in the foregoing embodiments are merely examples of the method procedures applicable to embodiments of this application. An execution sequence of the steps may be correspondingly adjusted based on an actual requirement, or another step may be added, or some steps may be reduced. For specific implementations of the steps, refer to related descriptions in the foregoing embodiments. Details are not described herein again.

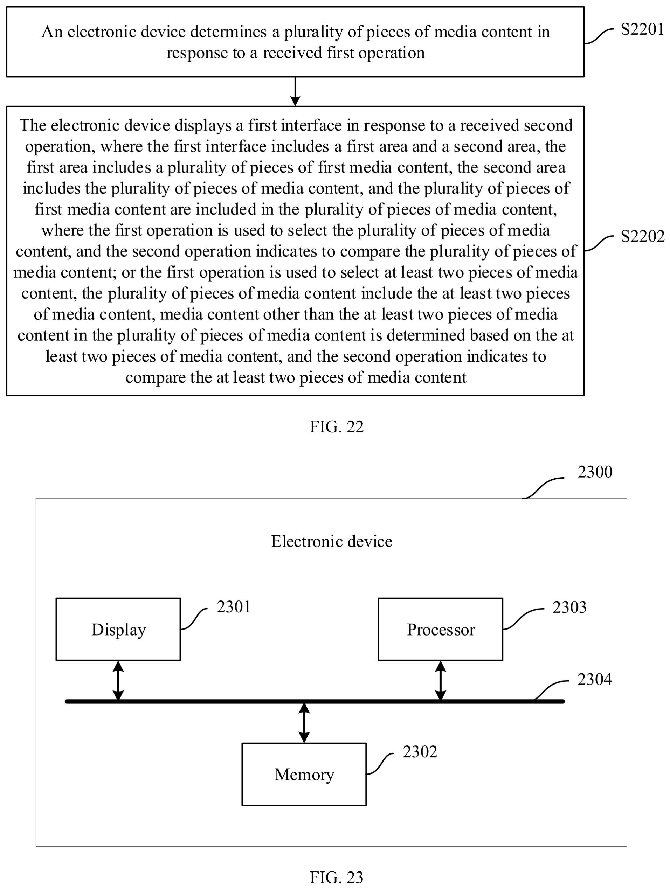

Based on the foregoing embodiments and same technical concepts, an embodiment of this application further provides a display method. As shown in FIG. 22, the method may include the following steps.

S2201: An electronic device determines a plurality of pieces of media content in response to a received first operation.

In this embodiment of this application, the media content may be at least one of the following types of content: a picture, an animated image, a video, and an audio. For a source of the media content, refer to descriptions in the foregoing embodiments. Details are not described herein again.

In an example, the media content is a picture, and the plurality of pieces of media content may be pictures in the gallery in the foregoing embodiments.

S2202: The electronic device displays a first interface in response to a received second operation, where the first interface includes a first area and a second area, the first area includes a plurality of pieces of first media content, the second area includes the plurality of pieces of media content, and the plurality of pieces of first media content are included in the plurality of pieces of media content, where the first operation is used to select the plurality of pieces of media content, and the second operation indicates to compare the plurality of pieces of media content; or the first operation is used to select at least two pieces of media content, the plurality of pieces of media content include the at least two pieces of media content, media content other than the at least two pieces of media content in the plurality of pieces of media content is determined based on the at least two pieces of media content, and the second operation indicates to compare the at least two pieces of media content.

In an example, the media content is a picture. In a possible solution, when the first operation is used to select the plurality of pieces of media content, the first operation may be the first operation in the foregoing embodiment, and the plurality of pieces of media content may be the plurality of candidate pictures in the foregoing embodiment. For example, based on the method, the first operation may include an operation of selecting the plurality of candidate pictures by a user on a gallery interface shown in FIG. 4 and an operation of tapping, by the user, a compare control shown in FIG. 5. The first interface may be a picture comparison interface shown in FIG. 6. In another possible solution, when the first operation is used to select the at least two pieces of media content, the first operation may be the first operation described in the foregoing embodiment, the at least two pieces of media content may be the plurality of candidate pictures described in the foregoing embodiment, and the media content other than the at least two pieces of media content in the plurality of pieces of media content may be the at least one reference picture described in the foregoing embodiment. For example, based on the method, the first operation may include an operation of selecting the plurality of candidate pictures by a user on a gallery interface shown in FIG. 4 and an operation of tapping, by the user, a compare control shown in FIG. 5. The first interface may be a picture comparison interface shown in FIG. 9. In the foregoing method, the media content other than the at least two pieces of media content in the plurality of pieces of media content may be media content automatically selected or determined by the electronic device. Optionally, a similarity between any media content other than the at least two pieces of media content in the plurality of pieces of media content and any media content in the at least two pieces of media content is greater than or equal to a specified similarity threshold. For example, the media content is the picture in the foregoing embodiment. In other words, a similarity between any one of at least one reference picture and any one of the plurality of candidate pictures is greater than or equal to the specified similarity threshold.

In some embodiments of this application, for a manner of selecting the plurality of pieces of first media content from the plurality of pieces of media content, refer to the method for selecting a plurality of comparison pictures from the plurality of candidate pictures in the foregoing embodiment, or refer to the method for selecting a plurality of comparison pictures from the plurality of candidate pictures and the at least one reference picture in the foregoing embodiment. Details are not described herein again.

In some embodiments of this application, the plurality of pieces of first media content in the second area have a first mark, and the first mark indicates that the plurality of pieces of first media content are simultaneously displayed in the first area and the second area. For example, the first interface is the picture comparison interface shown in FIG. 9, and the first mark may be a "√" mark shown in FIG. 9.

In some embodiments of this application, the media content other than the at least two pieces of media content in the second area has a second mark, and the second mark is used to mark the media content automatically selected by the electronic device. For example, the first interface is the picture comparison interface shown in FIG. 9, and the second mark may be a "×" mark shown in FIG. 9.

In some embodiments of this application, a size of a display area occupied by each of the plurality of pieces of first media content in the first area is greater than a size of a display area occupied in the second area. For example, the first interface is the picture comparison interface shown in FIG. 9. A 1^{st} picture in the first area and a 1^{st} picture in the second area are a same picture, but a size of a display area, occupied by the 1^{st} picture in the first area, in the first area is greater than a size of a display area, occupied by the 1^{st} picture in the second area, in the second area.

In some embodiments of this application, after displaying the first interface in response to the received second operation, the electronic device may further perform at least one of the following operations.
(1) The electronic device updates second media content in the first area to third media content in response to a received third operation, where the second media content is one of the plurality of pieces of first media content, and the third media content is one of the plurality of pieces of media content except the plurality of pieces of first media content.

Optionally, after updating the second media content in the first area to the third media content, the electronic device may delete a first mark of the second media content in the second area, and may add a first mark to the third media content in the second area.

Based on the method, the electronic device may update media content in the first area with media content in the second area.

In an example, the first interface is the picture comparison interface shown in FIG. 6. The second media content may be the 1^{st} picture in the first area, the third media content may be a 5^{th} picture in the second area, and the third operation may be an operation of selecting, by the user, the 5^{th} picture in the second area, dragging the picture to a range of the 1^{st} picture in the first area, and then releasing the picture. In this scenario, for processing performed according to the foregoing processing method and effect obtained through processing, refer to the content described in Embodiment 5. Details are not described herein again.

(2) The electronic device additionally displays fourth media content in the first area in response to a received fourth operation, where the fourth media content is one of the plurality of pieces of media content except the plurality of pieces of first media content.

Optionally, after additionally displaying the fourth media content in the first area, the electronic device may add a first mark to fourth media content in the second area.

Based on the method, the electronic device may add the media content in the second area to the first area.

In an example, the first interface is the picture comparison interface shown in FIG. 6. The fourth media content may be a 5^{th} picture in the second area, and the fourth operation may be an operation of selecting, by the user, the 5^{th} picture in the second area, dragging the picture to a range of the first area, and releasing the picture. In this scenario, for processing performed according to the foregoing processing method and effect obtained through processing, refer to the content described in Embodiment 4. Details are not described herein again.

(3) In response to a received fifth operation, the electronic device zooms in fifth media content for display; or in response to a received sixth operation, the electronic device zooms out fifth media content for display, where the fifth media content is any one of the plurality of pieces of first media content.

Based on the method, the electronic device may zoom in or out a single piece of media content in the first area for display.

In an example, the first interface is the picture comparison interface shown in FIG. 6. The fifth media content may be a 1^{st} picture in the first area, and the fifth operation may be an operation of zooming in a picture performed by the user on the 1^{st} picture in the first area. In this scenario, for processing performed according to the foregoing processing method and effect obtained through processing, refer to the content described in Embodiment 7. Details are not described herein again.

(4) In response to a received seventh operation, the electronic device zooms in the plurality of pieces of first media content for display, where zoom-in ratios of the plurality of pieces of first media content are the same; or in response to a received eighth operation, zooming out the plurality of pieces of first media content for display, where zoom-out ratios of the plurality of pieces of first media content are the same.

Based on the method, the electronic device may zoom in or out the plurality of pieces of media content in the first area in a linked manner for display.

In an example, the first interface is the picture comparison interface shown in FIG. 6. The seventh operation may be an operation of zooming out a picture performed by the user in the first area. In this scenario, for processing performed according to the foregoing processing method and effect obtained through processing, refer to the content described in Embodiment 8. Details are not described herein again.

(5) The electronic device adjusts a display location of sixth media content in response to a received ninth operation; or changes display locations of sixth media content and seventh media content in response to a received tenth operation, where the sixth media content is one of the plurality of pieces of first media content, and the seventh media content is another one of the plurality of pieces of first media content.

The display location may also be understood as a display order of the media content in an area (that is, a ranking of the media content in the area).

Optionally, after changing the display locations of the sixth media content and the seventh media content, the electronic device may correspondingly change display locations of the sixth media content and the seventh media content in the second area.

Based on the method, the electronic device may adjust a display location or a display order of at least one piece of media content in the first area.

In an example, the first interface is the picture comparison interface shown in FIG. 6. The sixth media content may be a 1^{st} picture in the first area. The ninth operation may be an operation of selecting, by the user, the 1^{st} picture in the first area, dragging the picture to a location before a 4^{th} picture, and releasing from the drag. In this scenario, for processing performed according to the foregoing processing method and effect obtained through processing, refer to the content described in the 1^{st} example in Embodiment 9. Details are not described herein again.

In another example, the first interface is the picture comparison interface shown in FIG. 6. The sixth media content may be a 2^{nd} picture in the first area, the seventh media content may be a 1^{st} picture in the first area, and the ninth operation may be an operation of selecting, by the user, the 2^{nd} picture, dragging the picture to a location before the 1^{st} picture, and releasing from the drag. In this scenario, for processing performed according to the foregoing processing method and effect obtained through processing, refer to the content described in the 2^{nd} example in Embodiment 9. Details are not described herein again.

(6) The electronic device deletes eighth media content in the first area in response to a received eleventh operation, where the eighth media content is one of the plurality of pieces of first media content.

Optionally, when deleting the eighth media content in the first area, the electronic device may further delete the eighth media content in the second area at the same time.

In some embodiments of this application, before determining the plurality of pieces of media content in response to the received first operation, the electronic device may display a second interface, where the second interface includes the plurality of pieces of media content. After the electronic device deletes the eighth media content in the first area in response to the received eleventh operation, the electronic device may display a third interface in response to a received twelfth operation, where the third interface includes media content other than the eighth media content in the plurality of pieces of media content. Based on the method, processing that during displaying pictures for comparison, the electronic device deletes a picture in response to a user operation remains valid after the electronic device exits a mode of displaying pictures for comparison.

In an example, the first interface is the picture comparison interface shown in FIG. 6. The eighth media content may be a 1^{st} picture in the first area, and the eleventh operation may be an operation of tapping and deleting the 1^{st} picture in the first area by the user. The second interface may be an interface shown in FIG. 5. The twelfth operation may be an operation of tapping, by the user, an exit control on a picture comparison interface shown in FIG. 12, and the third interface may be an interface shown in FIG. 19. In this scenario, for processing performed according to the foregoing processing method and effect obtained through processing, refer to the content described in Embodiment 6 and Embodiment 11. Details are not described herein again.

(7) The electronic device adds a third mark to ninth media content in the first area in response to a received thirteenth operation, where the ninth media content is one of the plurality of pieces of first media content.

In an example, the first interface is the picture comparison interface shown in FIG. 6. The ninth media content may be a 1^{st} picture in the first area, and the thirteenth operation may be an operation of tapping, by the user, a Favorites icon corresponding to the 1^{st} picture in the first area. Adding the third mark may be changing the Favorites icon of the 1^{st} picture from white to black. In this scenario, for processing performed according to the foregoing processing method and effect obtained through processing, refer to the content described in Embodiment 10. Details are not described herein again.

Optionally, when adding the third mark to the ninth media content in the first area, the electronic device may further add a third mark to the ninth media content in the second area.

In some embodiments of this application, before determining the plurality of pieces of media content in response to the received first operation, the electronic device may display a second interface, where the second interface includes the plurality of pieces of media content. After adding the third mark to the ninth media content in the first area in response to the received thirteenth operation, the electronic device may display a fourth interface in response to a received fourteenth operation, where the fourth interface includes the plurality of pieces of media content, and the ninth media content in the plurality of pieces of media content has the third mark. Based on the method, processing that during displaying pictures for comparison, the electronic device marks a picture in response to a user operation remains valid after the electronic device exits a mode of displaying pictures for comparison.

(8) The electronic device updates tenth media content in the first area in response to a received fifteenth operation, where the tenth media content is one of the plurality of pieces of first media content.

Optionally, when updating the tenth media content in the first area, the electronic device may further correspondingly update tenth media content in the second area, that is, replace the tenth media content in the second area with updated tenth media content.

In some embodiments of this application, before determining the plurality of pieces of media content in response to the received first operation, the electronic device may display a second interface, where the second interface includes the plurality of pieces of media content. After updating the tenth media content in the first area in response to the received fifteenth operation, the electronic device may further display a fifth interface in response to a received sixteenth operation, where the fifth interface includes: media content other than the tenth media content in the plurality of pieces of media content, and updated tenth media content.

In some embodiments of this application, when the media content is a video or an audio, after displaying the first interface in response to the received second operation, the electronic device may further start to play the eleventh media content from a first location of the eleventh media content, and start to play twelfth media content from a second location of the twelfth media content, where the eleventh media content is one of the plurality of pieces of first media content, the twelfth media content is another one of the plurality of pieces of first media content, and a similarity between media content at the first location of the eleventh media content and media content at the second location of the twelfth media content is greater than or equal to a specified threshold. Based on the method, when comparing a video or an audio, the electronic device may simultaneously start to play the video or audio from similar locations of a plurality of videos or audios, to facilitate comparison by the user.

In an example, the first interface is a video comparison interface shown in FIG. 21a. The eleventh media content may be any one of a video 1, a video 3, and a video 4, and the twelfth media content may be another one of the video 1, the video 3, and the video 4. It is assumed that the eleventh media content is the video 1, and the twelfth media content is the video 3. In this case, the first location of the eleventh media content may be the 10^{th} second (or a video frame at the 10^{th} second) of the video 1, and the second location of the twelfth media content may be the 12^{th} second (or a video frame at the 12^{th} second) of the video 3. The eleventh media content starts to be played from the first location of the eleventh media content, that is, the video starts to be played from the video frame at the 10^{th} second of the video 1; and the twelfth media content starts to be played from the second location of the twelfth media content, that is, the video starts to be played from the video frame at the 12^{th} second of the video 3. In this scenario, for processing performed according to the foregoing processing method and effect obtained through processing, refer to the content described in Embodiment 12. Details are not described herein again.

For a specific implementation corresponding to the foregoing method, refer to descriptions of the related method in the foregoing embodiments. Details are not described herein again.

Based on the foregoing embodiments and a same technical concept, an embodiment of this application further provides an electronic device. The electronic device may be configured to implement the display method provided in embodiments of this application. As shown in FIG. 23, the electronic device 2300 may include a display 2301, a memory 2302, one or more processors 2303, and one or more computer programs (not shown in the figure). The foregoing components may be coupled through one or more communication buses 2304.

The display 2301 is configured to display a related user interface such as an application interface.

The memory 2302 stores the one or more computer programs (code), and the one or more computer programs include computer instructions. The one or more processors 2303 invoke the computer instructions stored in the memory 2302, so that the electronic device 2300 performs the display method provided in embodiments of this application.

During specific implementation, the memory 2302 may include a high-speed random access memory, and may also include a non-volatile memory, for example, one or more magnetic disk storage devices, a flash storage device, or another non-volatile solid-state storage device. The memory 2302 may store an operating system (which is briefly referred to as a system below), for example, an embedded operating system such as Android, iOS, Windows, or Linux. The memory 2302 may be configured to store an implementation program of embodiments of this application. The memory 2302 may further store a network communication program. The network communication program may be used for communication with one or more additional devices, one or more user equipments, or one or more network devices.

The one or more processors 2303 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 23 is merely an implementation of the electronic device 2300 provided in this embodiment of this application. During actual application, the electronic device 2300 may alternatively include more or fewer components. This is not limited herein.

Based on the foregoing embodiments and a same technical concept, an embodiment of this application further provides a computer-readable storage medium. The computer-readable storage medium stores a computer program. When the computer program is run on a computer, the computer is caused to perform the method provided in the foregoing embodiments.

Based on the foregoing embodiments and a same technical concept, an embodiment of this application further provides a computer program product. The computer program product includes a computer program or instructions. When the computer program or the instructions are run on a computer, the computer is caused to perform the method provided in the foregoing embodiments.

All or a part of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the protection scope defined by the following claims and their equivalent technologies.

## Claims

1. A display method, applied to an electronic device, wherein the method comprises:
determining a plurality of pieces of media content in response to a received first operation; and
displaying a first interface in response to a received second operation, wherein the first interface comprises a first area and a second area, the first area comprises a plurality of pieces of first media content, the second area comprises the plurality of pieces of media content, and the plurality of pieces of first media content are comprised in the plurality of pieces of media content,
wherein
the first operation is used to select the plurality of pieces of media content, and the second operation indicates to compare the plurality of pieces of media content; or
the first operation is used to select at least two pieces of media content, the plurality of pieces of media content comprise the at least two pieces of media content, media content other than the at least two pieces of media content in the plurality of pieces of media content is determined based on the at least two pieces of media content, and the second operation indicates to compare the at least two pieces of media content.

2. The method according to claim 1, wherein the media content is at least one of the following types of content: a picture, an animated image, a video, and an audio.

3. The method according to claim 1 or 2, wherein a size of a display area occupied by each of the plurality of pieces of first media content in the first area is greater than a size of a display area occupied in the second area.

4. The method according to any one of claims 1 to 3, wherein a similarity between any media content other than the at least two pieces of media content in the plurality of pieces of media content and any media content in the at least two pieces of media content is greater than or equal to a specified similarity threshold.

5. The method according to any one of claims 1 to 4, wherein the plurality of pieces of first media content in the second area have a first mark, and the first mark indicates that the plurality of pieces of first media content are simultaneously displayed in the first area and the second area.

6. The method according to any one of claims 1 to 5, wherein the media content other than the at least two pieces of media content in the second area has a second mark, and the second mark is used to mark media content automatically selected by the electronic device.

7. The method according to any one of claims 1 to 6, wherein after displaying the first interface in response to the received second operation, the method further comprises:
updating second media content in the first area to third media content in response to a received third operation, wherein the second media content is one of the plurality of pieces of first media content, and the third media content is one of the plurality of pieces of media content other than the plurality of pieces of first media content.

8. The method according to any one of claims 1 to 6, wherein after displaying the first interface in response to the received second operation, the method further comprises:
additionally displaying fourth media content in the first area in response to a received fourth operation, wherein the fourth media content is one of the plurality of pieces of media content other than the plurality of pieces of first media content.

9. The method according to any one of claims 1 to 6, wherein after displaying the first interface in response to the received second operation, the method further comprises:
in response to a received fifth operation, zooming in fifth media content for display; or
in response to a received sixth operation, zooming out fifth media content for display, wherein
the fifth media content is any one of the plurality of pieces of first media content.

10. The method according to any one of claims 1 to 6, wherein after displaying the first interface in response to the received second operation, the method further comprises:
in response to a received seventh operation, zooming in the plurality of pieces of first media content for display, wherein zoom-in ratios of the plurality of pieces of first media content are the same; or
in response to a received eighth operation, zooming out the plurality of pieces of first media content for display, wherein zoom-out ratios of the plurality of pieces of first media content are the same.

11. The method according to any one of claims 1 to 6, wherein after displaying the first interface in response to the received second operation, the method further comprises:
adjusting a display location of sixth media content in response to a received ninth operation; or
changing display locations of sixth media content and seventh media content in response to a received tenth operation, wherein
the sixth media content is one of the plurality of pieces of first media content, and the seventh media content is another one of the plurality of pieces of first media content.

12. The method according to any one of claims 1 to 6, wherein after displaying the first interface in response to the received second operation, the method further comprises:
deleting eighth media content in the first area in response to a received eleventh operation, wherein the eighth media content is one of the plurality of pieces of first media content.

13. The method according to claim 12, wherein before determining the plurality of pieces of media content in response to the received first operation, the method further comprises:
displaying a second interface, wherein the second interface comprises the plurality of pieces of media content; and
after deleting the eighth media content in the first area in response to the received eleventh operation, the method further comprises:
displaying a third interface in response to a received twelfth operation, wherein the third interface comprises media content other than the eighth media content in the plurality of pieces of media content.

14. The method according to any one of claims 1 to 6, wherein after displaying the first interface in response to the received second operation, the method further comprises:
adding a third mark to ninth media content in the first area in response to a received thirteenth operation, wherein the ninth media content is one of the plurality of pieces of first media content.

15. The method according to claim 14, wherein before determining the plurality of pieces of media content in response to the received first operation, the method further comprises:
displaying a second interface, wherein the second interface comprises the plurality of pieces of media content; and
after adding the third mark to the ninth media content in the first area in response to the received thirteenth operation, the method further comprises:
displaying a fourth interface in response to a received fourteenth operation, wherein the fourth interface comprises the plurality of pieces of media content, and the ninth media content in the plurality of pieces of media content has the third mark.

16. The method according to any one of claims 1 to 6, wherein after displaying the first interface in response to the received second operation, the method further comprises:
updating tenth media content in the first area in response to a received fifteenth operation, wherein the tenth media content is one of the plurality of pieces of first media content.

17. The method according to claim 16, wherein before determining the plurality of pieces of media content in response to the received first operation, the method further comprises:
displaying a second interface, wherein the second interface comprises the plurality of pieces of media content; and
after updating the tenth media content in the first area in response to the received fifteenth operation, the method further comprises:
displaying a fifth interface in response to a received sixteenth operation, wherein the fifth interface comprises: media content other than the tenth media content in the plurality of pieces of media content, and updated tenth media content.

18. The method according to claim 1, wherein the media content is a video or an audio; and after displaying the first interface in response to the received second operation, the method further comprises:
starting to play eleventh media content from a first location of the eleventh media content, and starting to play twelfth media content from a second location of the twelfth media content, wherein
the eleventh media content is one of the plurality of pieces of first media content, the twelfth media content is another one of the plurality of pieces of first media content, and a similarity between media content at the first location of the eleventh media content and media content at the second location of the twelfth media content is greater than or equal to a specified threshold.

19. An electronic device, wherein the electronic device comprises a display, a memory, and one or more processors; and
the memory is configured to store computer program code, and the computer program code comprises computer instructions; and when the computer instructions are executed by the one or more processors, the electronic device is caused to perform the method according to any one of claims 1 to 18.

20. A computer-readable storage medium, wherein the computer-readable storage medium stores a computer program, and when the computer program is run on an electronic device, the electronic device is caused to perform the method according to any one of claims 1 to 18.

21. A computer program product, wherein the computer program product comprises a computer program or instructions, and when the computer program or the instructions are run on an electronic device, the electronic device is caused to perform the method according to any one of claims 1 to 18.
